# EUROPEAN PATENT SPECIFICATION

(11) **EP 1 875 710 B1**
(45) Date of publication and mention of the grant of the patent: **23.11.2011**
(21) Application number: 06732502.7
(22) Date of filing: 28.04.2006
(51) Int. Cl.: H04L 29/06

(54) **SYSTEM, ASSOCIATED METHODS AND APPARATUS FOR SECURING PREFIX-SCOPED BINDING UPDATES**
SYSTEM, ASSOZIERTE VERFAHREN UND VORRICHTUNGEN ZUM SICHERN VON PRÄFIX-SCOPE-BINDUNGS-AKTUALISIERUNGEN
SYSTEME, METHODES ET APPAREIL ASSOCIES POUR FIXER DES MISES A JOUR DE LIAISON A PORTEE PREDETERMINEE

(30) Priority: 28.04.2005 JP 2005133711
(43) Date of publication of application: 09.01.2008
(73) Proprietor: Panasonic Corporation, Kadoma-shi Osaka 571-8501 (JP)
(72) Inventor: HIRANO, Jun c/o Matsushita Electric Industrial Co., Ltd., Chuo-ku, Osaka 540-6207 (JP); NG, Chan, Wah c/o Panasonic Singapore Laboratories Pte. Ltd., Tai Seng Industrial Estate Singapore 534415 (SG); TAN, Pek, Yew c/o Panasonic Singapore Laboratories Pte. Ltd., Tai Seng Industrial Estate Singapore 534415 (SG)
(74) Representative: Grünecker, Kinkeldey, Stockmair & Schwanhäusser
(86) International application number: PCT/JP2006/309350
(87) International publication number: WO 2006/118342

(56) References cited:
- EP-A- 1 505 780
- US-A- 6 134 550
- US-A1- 2004 205 211
- NG PANASONIC SINGAPORE LABS T TANAKA MATSUSHITA COMMUNICATIONS INDUSTRIAL C W: "Usage Scenario and Requirements for AAA in Network Mobility Support; draft-ng-nemo-aaa-use-00.txt" IETF STANDARD-WORKING-DRAFT, INTERNET ENGINEERING TASK FORCE, IETF, CH, October 2002 (2002-10), XP015004581 ISSN: 0000-0004
- KYEONGJIN LEE ET AL: "Route optimization for mobile nodes in mobile network based on prefix delegation" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, vol. 3, 6 October 2003 (2003-10-06), pages 2035-2038, XP010702748 ISBN: 0-7803-7954-3

## Description

The present invention relates to the field of data communication. More particularly, the present invention concerns mobile networks in a system of interconnected packet-switched data communication networks.

Many devices today communicate with each other using the Internet Protocol (IP). In order to provide mobility support to mobile devices, the Internet Engineering Task Force (IETF) has developed the "Mobility Support in IPv6" [Non-patent Document 1]. In Mobile IP, each mobile node has a permanent home domain. When the mobile node is attached to its home network, it is assigned a primary global address known as a home-address (HoA). When the mobile node is away, i.e. attached to some other foreign networks, it is usually assigned a temporary global address known as a care-of-address (CoA). The idea of mobility support is such that the mobile node can be reached at the HoA even when it is attached to other foreign networks. This is done in [Non-patent Document 1] with an introduction of an entity at the home network known as a home agent (HA). The mobile node registers its CoA with the home agent using messages known as Binding Updates (BU). This allows the home agent to create a binding between the HoA and CoA of the mobile node. The home agent is responsible to intercept messages that are addressed to the mobile node's HoA, and forward the packet to the mobile node's CoA using packet encapsulation (i.e. putting one packet as the payload of a new packet, also known as packet tunneling).

Although this enables mobility support, a problem known as sub-optimal routing occurs. This is because when a mobile node communicates with a correspondent node (CN), packets sent between them must go through the home agent. For this reason, [Non-patent Document 1] specifies that the mobile node can send a BU to the correspondent node. Once the correspondent node knows of the binding between the HoA and CoA of the mobile node, packets traversing between them can be directly routed to and from the CoA of the mobile node (without going through the home agent). However, security is now a concern. BU sent from the mobile node to the home agent can be secured, because it is assumed that the mobile node and its home agent share a security association. Such an assumption becomes unrealistic for a mobile node and a correspondent node.

For this, [Non-patent Document 1] specifies a procedure known as the Return Routability (RR) procedure, which allows the correspondent node to ascertain that the HoA and CoA specified in a BU are indeed collocated. In essence, the RR procedure requires the mobile node to obtain two securely generated tokens from the correspondent node prior to sending it a BU. To initiate the RR procedure, the mobile node first sends the correspondent node two different messages: a Home-Test-Init (HoTI) message, and a Care-of-Test-Init (CoTI) message. The HoTI is sent via the home agent with the mobile node's HoA as the packet source, and the CoTI is sent directly with the mobile node's CoA as the packet source. The correspondent node, upon receiving the HoTI, will reply with a Home-Test (HoT) message sent to the HoA of the mobile node that contains a security token, called the Home Keygen Token (HoK), cryptographically generated based on the HoA of the mobile node using a private key. Similarly, the correspondent node, upon receiving the CoTI, will reply with a Care-of-Test (CoT) message sent to the CoA of the mobile node that contains a security token, called the Care-of Keygen Token (CoK), cryptographically generated based on the CoA of the mobile node using a private key. Once the mobile node receives both the HoT and CoT messages, it can send the correspondent node a BU containing an Authenticator. This Authenticator is a cryptographically generated checksum of the BU using a key that is a concatenation of the HoK and CoK. In this way, when the correspondent node receives the BU, it can independently calculate the checksum and check that the checksum is identical to that carried in the Authenticator. This verifies that the CoA and the HoA specified in the BU are indeed collocated.

There have been arguments criticizing the strength of protection provided by the Return Routability procedure. It is possible for an attacker to be able to intercept both the CoT and HoT messages, and thus gain privy to the mobility key established by the Return Routability procedure. Even worst, such an attacker can easily construct fake CoTI and HoTI messages and fool the correspondent node into binding the HoA of the mobile node to a wrong CoA. This allows the attacker to launch a denial-of-service attack on the mobile node, or cause the correspondent node to unwittingly participate in a flooding attack against the true owner of the specified CoA. For this, [US Patent Application 20050041634A1] and [US Patent Application 20030211842A1] specify the use of cryptographically generated certificates that verify the ownership of addresses to be used when a mobile node sends BU to correspondent nodes. In one aspect of these prior arts, the HoA and/or CoA themselves are generated cryptographically, using techniques such as those disclosed in [US Patent Application 20020133607A1], so that the HoA and/or CoA are cryptographically associated with the certificates sent within the BU, making a hijack of the addresses close to impossible.

With the ever-increasing proliferation of wireless devices, it is foreseeable that a new class of mobility technology will emerge: network mobility, where a whole network of nodes changes its point of attachment in entirety. Extending the concept of mobility support for individual hosts to mobility support for a network of nodes, the objective of a network in motion solution is to provide a mechanism where nodes in a mobile network can be reached by their primary global addresses, no matter where on the Internet the mobile network is attached to. There exist a few prior attempts to solve the network in motion problem based on Mobile IP. One proposed solution for network in motion is the Mobile Router Support [US Patent 6636498]. Here the mobile router controlling a mobile network performs routing of packets to and from the mobile network using some routing protocols when it is in its home domain. When the mobile router and its mobile network move to a foreign domain, the mobile router registers its CoA with its home agent. A tunnel is then set up between the mobile router and the home agent. The routing protocol used when the mobile router is at its home domain is again performed over the tunnel. This means that every packet going to the mobile network will be intercepted by the home agent and forwarded to the mobile router through the tunnel. The mobile router then forwards the packet to a host in its mobile network. When a node in its mobile network wishes to send a packet out of the network, the mobile router intercepts the packet and forwards the packet to the home agent through the tunnel. The home agent then sends the packet out to the intended recipient. Another solution disclosed in [US Patent Application US20030117965A1] is largely similar, except it specifically states support for IPv6 only. In [US Patent Application US20030095523A1], a method of using a multicast address as the CoA of the mobile router is disclosed. This allows the mobile router to be reached using the same CoA even after it has moved to a new access network. The IETF is also currently developing solutions for network mobility as disclosed in [Non-patent Document 2]. In [Non-patent Document 2], it is specified that the mobile router when sending BU to the home agent, will specify the network prefix which the nodes in the mobile network are using. These are specified using special options known as Network Prefix Options to be inserted into the BU. These allow the home agent to build a prefix-based routing table so that the home agent will forward any packets sent to destinations with these prefixes to the CoA of the mobile router.
[Non-patent Document 1] Johnson, D. B., Perkins, C. E., and Arkko, J., "Mobility Support in IPv6", Internet Engineering Task Force Request For Comments 3775, June 2004.
[Non-patent Document 2] Devarapalli, V., et. al., "NEMO Basic Support Protocol", Internet Engineering Task Force Request For Comments 3963, January 2005.
[Non-patent Document 3] Arkko, J., et. al., "Secure Neighbor Discovery (SEND)", Internet Engineering Task Force Request For Comments 3971, March 2005.
[Non-patent Document 4] Ng, C.W., and Hirano, J., "Extending Return Routability Procedure for Network Prefix (RRNP)", Internet Engineering Task Force Internet Draft: draft-ng-nemo-rrnp-00.txt, Oct 2004, Work In Progress.
[Patent Document 1] (US Patent Application 20050041634A1) Aura, A. T., "Verifying location of a mobile node", US Patent Application 20050041634A1, February 2005.
[Patent Document 2] (US Patent Application 20030211842A1) Kempf, J., et. al., "Securing Binding Update Using Address Based Keys", US Patent Application 20030211842A1, November 2003.
[Patent Document 3] (US Patent Application 20020133607A1) Nikander, P., "Address Mechanism in Internet Protocol", US Patent Application 20020133607A1, September 2002.
[Patent Document 4] (US Patent 6636498) Leung, K. K., "Mobile IP mobile router", US Patent 6,636,498, Oct 2003.
[Patent Document 5] (US Patent Application 20030117965A1) Markki, O. E., et. al., "Mobile Router Support for IPv6", US Patent Application 20030117965A1, Mar 2002.
[Patent Document 6] (US Patent Application 20030095523A1) Korus et. al., "Method and Apparatus for providing IP mobility for mobile network", US Patent Application 20030095523A1, May 2003.
In [US Patent 6636498], [US Patent Application US20030117965A1] and [Non-patent Document 2], there is no provision for packets to be sent directly from the mobile network to a correspondent node without going through the home agent. This leads to the same problem of sub-optimal routing in Mobile IPv6, resulting in higher packet latency. Although [US Patent Application 20030095523A1] mentions the means of sending the correspondent node a BU that binds the multicast CoA to the HoA of the mobile router, it is unclear how the correspondent node can associate addresses of mobile network nodes in the mobile network behind the mobile router with the HoA of the mobile router.

A naive solution is to simply include a singular or plurality of network prefix options as mentioned in [Non-patent Document 2] into BU messages sent to correspondent nodes. Such a BU message is known in the art as prefix-scoped BU message, or simply PSBU message. In this way, the correspondent node will associate addresses from the specified network prefix(es) with the mobile router, and can then send packets with destination from these prefixes directly to the CoA of the mobile router. Though this seems to be a plausible solution, careful analysis by a person skilled in the art will reveal that the RR procedure only ensures that the CoA is collocated with the HoA of the mobile router. By simply adding the network prefix option in the BU messages, the correspondent node has no means of ascertaining the specified network prefix is indeed handled by the mobile router with the specified HoA. Without such assurance, a malicious attacker can supply the correspondent node with its own (valid) HoA and CoA, but claim in the BU that it is handling prefixes that it does not actually own. This will open the doors to denial-of-service and spoofing attack, where the correspondent node sends packets meant for other nodes with address from the attacked prefixes to the attacker.

Although [US Patent Application 20050041634A1] and [US Patent Application 20030211842A1] provide for cryptographically certifying the CoA and HoA in a BU message, the authenticity of prefix information stored in a PSBU message is not covered. [Non-Patent Document 3] describes a method of using the Neighbor Discovery protocol of IPv6 to provide certificates for verifying the authenticity of routers and the prefixes they claim to manage. This uses special options called the Neighbor Discovery options to disseminate certificates. It is however limited to allow nodes on the same network segment as the router to verify the authority of the router. It is unclear how the concept of Neighbor Discovery options can be used for protecting PSBU messages.

Reference EP-A-1505780 relates to route optimization in a communication network supporting network mobility. This reference discusses the conventional solution to route optimization based on PSBU messages and the need for a mechanism to allow a CN to validate a PSBU. This reference further analyses the applicability of several methods already proposed for classic MIPv6 BU validation, including cryptographically generated addresses and the so-called return routability checking procedure (RRP). This reference explicitly concludes that PSBU cannot provide validated route optimization to the mobile network and proceeds by providing a method of validated communication between a mobile network node and a correspondent node, which does not rely on PSBU messages. More specifically, this reference provides an extended return routability checking procedure (XRRP) wherein, in addition to the conventional RRP, an MNN test initiation (MNNTI) message is sent by the MR, and a MNN test (MNNT) message is sent by the CN. The MR is further sending an extended binding update (XBU), comprising the address of the MNN. In this manner, route optimization between the correspondent node and an individual mobile network node can be achieved.

The document "Usage Scenario and Requirements for AAA in Network Mobility Support" by C. W. Ng and T. Tanaka, Internet Engineering Task Force 2002, describes various usage scenarios and requirements for authentication, authorization and accounting (AAA) in a communication network supporting network mobility. From this reference it is in particular known that an access router, which receives an access request from a mobile router, can contact an AAA server in the mobile router's home domain in order to verify the credentials provided by the mobile router. Depending on the result of the verification process, the access router will grant or deny the mobile router's access request.

It is thus the main object of the present invention to provide a mechanism to allow the receiver of a PSBU message to ascertain that the mobile router indeed owns the network prefix(es) specified in the PSBU message. Once the receiver verifies this, it can then setup routing information to forward, by means of packet encapsulation or otherwise, packets destined to addresses from the network prefixes directly to the CoA of the mobile router, without going through the home agent.

This is achieved by the features of the independent claims. Preferred embodiments are subject matter of the dependent claims.
Fig. 1 shows the network deployment diagram according to one preferred embodiment of the present invention;
Fig. 2 shows the path taken for packets sent between a correspondent node CN 160 and the mobile network node MNN 150 according to a prior art;
Fig. 3 shows the path taken for packets sent between a correspondent node CN 162 and the mobile network node MNN 150 according to a prior art;
Fig. 4 shows the exemplary packet format of a PSBU message sent by a mobile router to a correspondent node or a correspondent router according to a preferred embodiment of the present invention;
Fig. 5 shows a procedure followed by a correspondent node or router upon receipt of a PSBU message according to a preferred embodiment of the present invention;
Fig. 6 shows another procedure followed by a correspondent node or router upon receipt of a PSBU message according to a preferred embodiment of the present invention;
Fig. 7 shows the exemplary packet format of a message sent during the return routability procedure containing a capability option to notify the receiver of the sender's capabilities according to a preferred embodiment of the present invention;
Fig. 8a shows an exemplary message sequence chart where the mobile router MR 140 establishes route optimization with correspondent router CR 170 according to a preferred embodiment of the present invention;
Fig. 8b shows an exemplary message sequence chart where the mobile router MR 140 establishes route optimization with correspondent router CN 160 according to a preferred embodiment of the present invention;
Fig. 8c shows an exemplary message sequence chart where the mobile router MR 140 establishes route optimization with correspondent router CN 162 according to a preferred embodiment of the present invention; and
Fig. 9 shows the functional architecture of the mobile router MR 140 according to a preferred embodiment of the present invention.

### BEST MODE FOR CARRYING OUT THE INVENTION

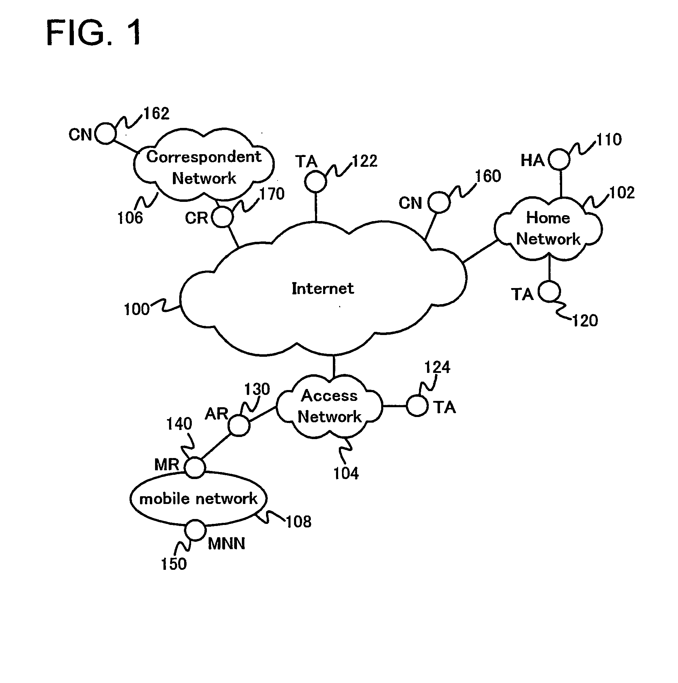

The present invention specifies a system of communication nodes connected to a global packet-switched data communication network such as the internet 100 as shown in Fig. 1. Mobile router MR 140 gains access to the internet 100 by attaching to the access router AR 130 of the access network 104. The mobile network 108 is managed by the mobile router 140. One mobile network node MNN 150 is shown in Fig. 1. Mobile router MR 140 belongs to the home network 102 with HA 110 acting as its home agent. The trust anchor TA 120 is an authority of the home network 102 that issues router certificates to routers, certifying the authority and authenticity of routers to manage prefixes in the home network 102. Such a router certificate is preferably generated by the TA 120 and contains an information portion and a signature portion. The information portion details the identity of a router and the ownership of the prefix or prefixes of the identified router. The signature portion is preferably a cryptographically generated checksum of the information portion.

One approach in generating such a checksum is for the trust anchor to possess a pair of cryptographic keys that are related in such a way that one key provides an encrypting function and another provides a corresponding decrypting function. The checksum can then be encrypted using the encrypting key of the trust anchor, and can be verified with the associated decrypting key. This encrypted checksum forms the signature portion. In operation, the encrypting key of the trust anchor is kept secret, while the associated decrypting key is freely distributed to any node requesting for it. This way, any entity can verify the signature portion (since the decrypting key is publicly available), but no one other than the trust anchor can generate such a signature portion (since the encrypting key is kept secret). This pair of keys is also known in the art as a public-private key pair. A preferable approach of generating and disseminating such router certificates is detailed in [Non-Patent Document 3].

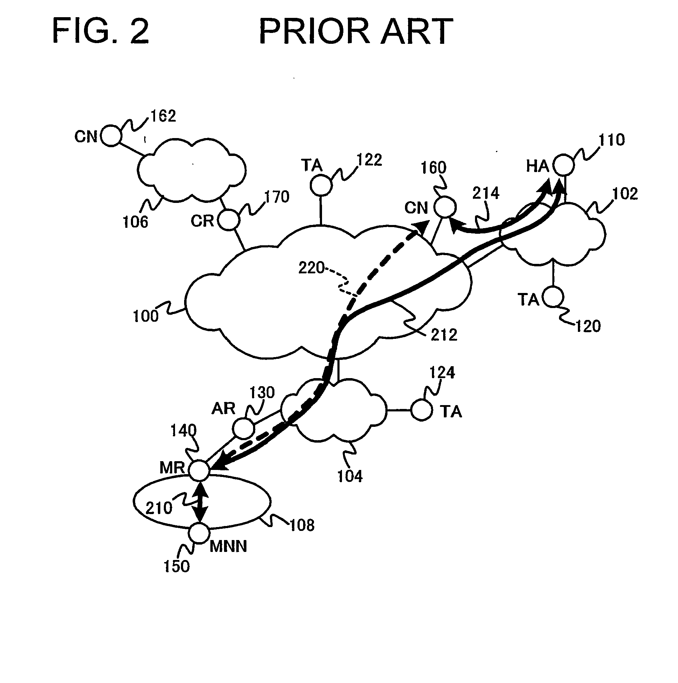

To better explain the present invention, consider the case when MNN 150 has a communication session with a correspondent node in the internet 100, say CN 160. According to the prior arts taught by [US Patent 6636498], [US Patent Application US20030117965A1] and [Non-patent Document 2], packets sent between MNN 150 and CN 160 will have to follow the path 210, 212 and 214 as shown in Fig. 2. This is because of the bi-directional tunnel set up between mobile router MR 140 and its home agent HA 110. To avoid this sub-optimal routing, and have the packets sent between MNN 150 and CN 160 follow a more direct path, one possible way to achieve this is to have mobile router MR 140 send prefix-scoped binding update (PSBU) messages to CN 160. The PSBU will contain the HoA and CoA of the mobile router MR 140, and the mobile network prefixes managed by MR 140. In this way, CN 160 will set up a route entry in its routing table specifying that any packets sent to an address falling within the mobile network prefix managed by MR 140 should be tunneled directly to the CoA of MR 140. Since MNN 150 has an address that falls within the mobile network prefix managed by MR 140, packets sent between MNN 150 and CN 160 would skip the paths 212 and 214, and instead follow the more direct router 210 and 220 shown in Fig. 2.

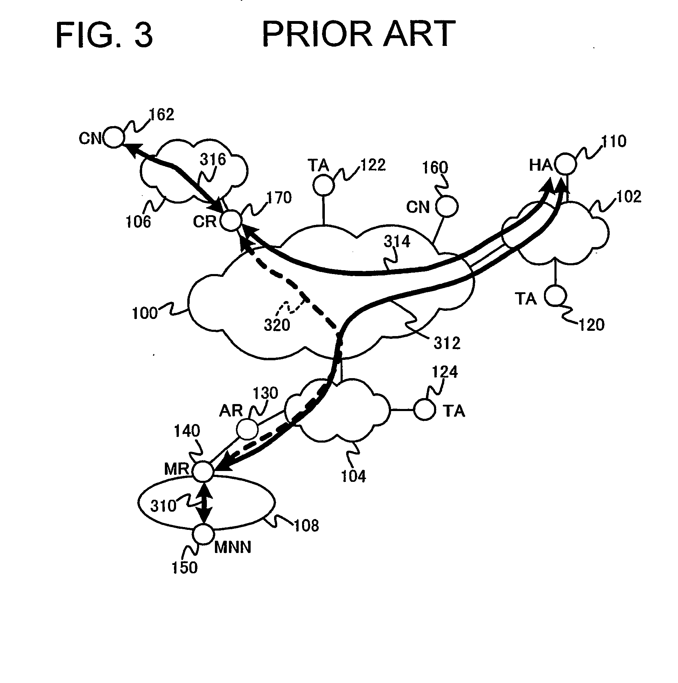

The same concept of route optimization can be applied if the correspondent node uses an external agent to perform route optimization on its behalf. For instance, consider the correspondent node CN 162 within the correspondent network 106 illustrated in Fig. 1 A correspondent router CR 170 is capable of performing route optimization on behalf of any nodes within the correspondent network 106. Consider the case when MNN 150 has a communication session with CN 162. If no route optimization is used, packets sent between MNN 150 and CN 162 would follow the paths 310, 312, 314, and 316 as shown in Fig. 3. Suppose MR 140 now knows that CR 170 is capable of performing route optimization for CN 162. MR 140 can then send a PSBU message to CR 170 to establish a bi-directional tunnel between MR 140 and CR 170. With the bi-directional tunnel in place, traffic flowing between MNN 150 and CN 162 could follow the more direct route of paths 310, 320 and 316 as shown in Fig. 3.

Although the sending of PSBU to a correspondent node or correspondent router (for ease of explanation, the term "correspondent entity" or its abbreviation CE will henceforth be used to refer to either the correspondent node or correspondent router that has the capability of terminating a route optimization session with a mobile router) has the advantage of optimizing the route between a mobile network node and a correspondent node, the correspondent entity will be exposed to security risk. This is because if the correspondent entity has no means of verifying the authenticity of the information contained in a PSBU message, it may be tricked into setting up a false route so that packets sent to the mobile network node are unknowingly redirected to someone else. The present invention aims to provide the correspondent entity a means of verifying the information contained in the PSBU message.

Recall that the trust anchor TA 120 is the authority in issuing router certificates to routers within the home network 102 to certify their authenticity in managing the prefixes within the home network 102. Mobile router MR 140 can obtain a router certificate from TA 120 via the bi-directional tunnel the mobile router MR 140 maintains with the home agent HA 110. After obtaining such a router certificate, the mobile router MR 140 can use the router certificate to prove its ownership of the mobile network prefix it specifies in the PSBU message.

One way the mobile router MR 140 can obtain a router certificate is by having the router certificate manually configured to the system, and stored in a secondary storage of the mobile router. In this case, the router certificate should preferably have a long period of validity (such as weeks or months). In the field of relevant art, there is always an assumed, pre-existing security relationship between the mobile router and its home agent. This pre-existing security relationship is used to protect the BU messages sent by the mobile router to its home agent. The router certificate, when manually configured into the system of the mobile router, can be part of this "pre-existing security relationship". In fact, the router certificate can be the "pre-existing security relationship". The mobile router MR 140 can use this router certificate to sign the BU messages it sent to the home agent HA 110. The home agent HA 110, upon receiving this BU message, can retrieve the public key of TA 110 in the home network, and verify the authenticity of the BU message. A person skilled in the art should appreciate that the home agent HA 110 and trust anchor TA 120, may in fact be residing on the same entity (i.e. they are the same node) .

Another way to obtain router certificate is for the mobile router to use Neighbor Discovery options as specified in [Non-Patent Document 3] over the bi-directional tunnel established between the mobile router MR 140 and HA 110. Preferably, MR 140 will start to obtain the router certificate from TA 120 shortly after the bi-directional tunnel with its home agent HA 110 is established.

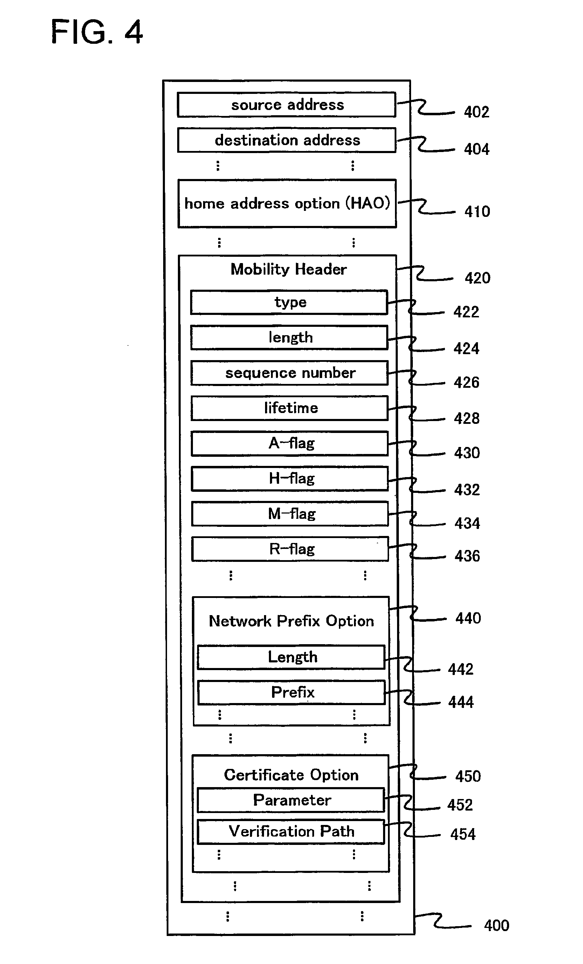

Yet another approach in which the mobile router MR 140 can obtain the router certificate is through the aid of the home agent HA 110. Here, when the mobile router MR 140 sends a BU message to its home agent HA 110 for home registration, it can embed a signal into the BU message. This signal notifies the home agent HA 110 that the mobile router MR 140 requires the home agent HA 110 to obtain a router certificate for the mobile network prefixes MR 140 manages. This signal may preferably be implemented as setting a bit in the flag of the BU message, or alternatively, be an extra mobility option inserted into the BU message. Once the home agent HA 110 detects this signal, it will obtain a router certificate from the trust anchor TA 120 on behalf of the mobile router. In any case, since the home agent HA 110 needs to intercept packets for the mobile network prefixes, it will have to obtain some form of router certificates anyway. The router certificate, once obtained, can be transmitted back to the mobile router MR 140 by placing the router certificate into an option of the binding acknowledgement message. Such an option may be the certificate option shown in Fig. 4 which is described later in this specification.

In addition, some proposals in the relevant field of art suggest the use of prefix delegation to delegate mobile network prefix to the mobile router. Such prefix delegation mechanism may either be a standard Dynamic Host Configuration Protocol (DHCP) performed over the bi-directional tunnel established between the mobile router and its home agent, or combined into the binding update procedure. In the latter, a special signal is embedded into the BU message sent by a mobile router to notify the home agent that the mobile router requires a mobile network prefix be delegated. The home agent will then informs the mobile router of the delegated prefix by embedding such information into the binding acknowledgment sent to the mobile router. Router certificates for the delegated prefix may be distributed at the same time the prefix is delegated. If DHCP is used, the router certificate for the delegated prefix may be passed to the mobile router at the same time the prefix is delegated in the relevant DHCP message. If prefix delegation is embedded into the binding update and acknowledgement messages, an addition signal may be inserted to the binding update message to inform the home agent that router certificate is also required, in addition to the network prefix. The home agent can then insert the router certificate together with the delegated prefix into the binding acknowledgement message that is transmitted to the mobile router.

There are various ways in which the mobile router can incorporate router certificate for the verification of network prefixes specified in PSBU message. Some of the more preferably approaches will be described henceforth.

The preferred mode of operation will be for the mobile router MR 140 to insert some parameters derived from the router certificate signed by the trust anchor TA 120 in the PSBU message sent to the correspondent entity (CN 160 or CR 170). Fig. 4 shows the format of the PSBU message 400. The source address field 402 and destination address field 404 of the PSBU message 400 should contain the CoA of MR 140 and the address of the correspondent entity respectively. The PSBU message should contain a Home Address Option 410 to convey the HoA of MR 140. The actual content of the PSBU is stored in the mobility header 420. The type field 422 specifies this message as a Binding Update message, and the Length field 424 specifies the size of the mobility header 420. The sequence number field 426 is a monotonically increasing number to identify the BU message and also protects against replay attacks. The lifetime field 428 indicates the length of time within which the bindings specified in the BU message is valid. The BU message 400 also contains a series of flags 430 through 436. The A-flag 430 is set when MR 140 requests the recipient to response with a binding acknowledgement message. The H-flag 432 is cleared to indicate that this is not a home registration. The M-flag 434 is cleared to indicate that this is not a mobile anchor point registration. The R-flag is set to indicate that the sender (i.e. MR 140) acts as a router, and the BU message 400 will contain one or more Network Prefix option 440. Each Network Prefix option 440 will contain information on one mobile network prefix managed by the mobile router MR 140. The length field 442 indicates the prefix length in number of bits, and the prefix field 444 contains the actual prefix.

The afore-mentioned fields of the BU message 400 are known in the prior arts. This invention introduces a new certificate option 450 for MR 140 to include a security parameter for verifying its claim of owning the prefix specified in the network prefix option 440. The parameter field 452 contains parameters derived from the router certificate obtained from TA 120. The verification path field 454 contains information that identifies the trust anchor TA 120, so that the recipient knows which entity to contact in order to verify the authenticity of parameter field 452.

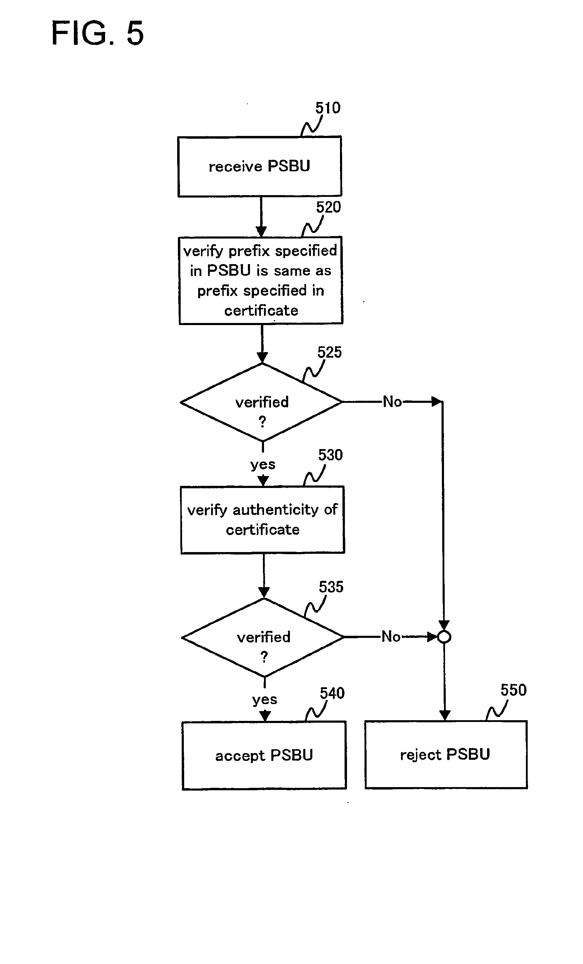

The parameter field 454 can preferably contain the actual router certificate itself, either partial or in entirety. Upon receiving the PSBU message with the router certificate, the correspondent entity (CN 160 or CR 170) can verify the authenticity of the PSBU message based on the information stored in the PSBU message. This is illustrated in Fig. 5. Firstly, the correspondent entity, after receiving the PSBU message as shown in step 510, should verify if the prefix information specified in the Network Prefix option of the PSBU message is identical to or is a sub-range wholly contained within the prefix specified in the router certificate that accompanied the PSBU message, as shown in step 520. If the prefix specified in the Network Prefix option does not match the prefix stated in the router certificate, the correspondent entity should reject the PSBU message as shown in steps 525 and 550. If the prefixes match, step 530 is taken, where the correspondent node verifies the authenticity of the certificate itself. This may comprise, but not limited to, checking if the router certificate contains a valid signature portion. If the router certificate is verified to be valid, step 540 is taken where the correspondent entity accepts the PSBU message. Else, step 550 is taken where the correspondent entity rejects the PSBU message.

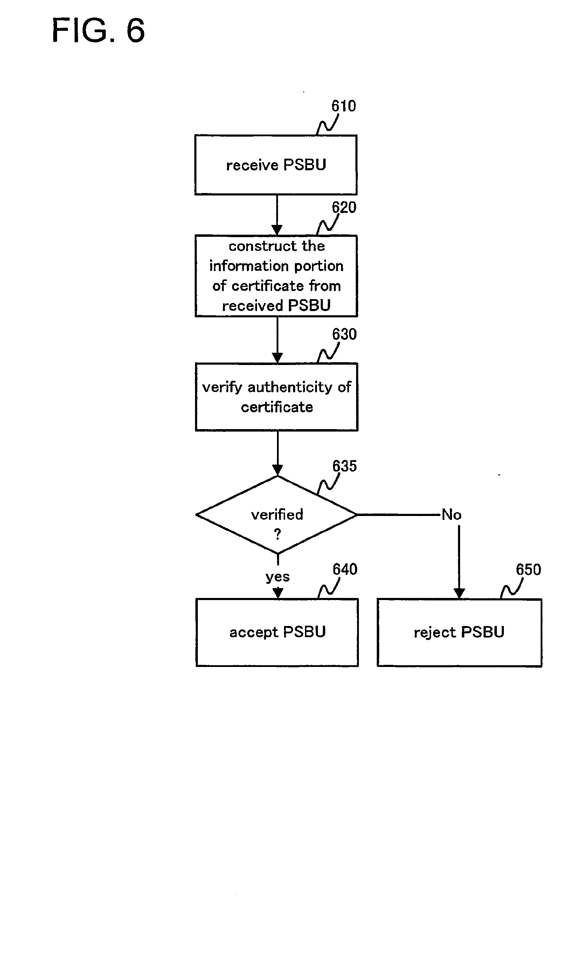

Alternatively, the parameter field 454 may contain only the signature portion of the router certificate. In this case, the correspondent entity needs to derive the information portion of the router certificate based on contents extracted from the received PSBU message independently. This is illustrated in Fig. 6. Firstly, the correspondent entity, after receiving the PSBU message as shown in step 610, constructs the information portion of the router certificate based on the contents of the received PSBU message. This entails a standardized method for TA 120 and correspondent entity to construct the information portion of the router certificate. For example, a standardization body, such as the Internet Engineering Task Force, may mandate the contents of information portion of the router certificate. They may specify that the information portion be structured with the HoA of the mobile router, followed by the mobile network prefixes ordered in the same order of the appearance of the associated Network Prefix options in the PSBU message.

In any case, the correspondent entity will construct the information portion of the router certificate in step 620 based on contents from the received PSBU message. The correspondent entity then verifies the signature portion of the router certificate conveyed in the certificate option of the PSBU message in step 630. If the signature portion is verified to be valid, steps 635 and 640 will be taken where the correspondent entity accepts the PSBU message. Else, step 640 is taken where the correspondent entity rejects the PSBU message.

Both the two aforementioned methods require the correspondent entity to verify the signature portion transmitted in the received PSBU message. The correspondent entity can do so by first identifying the trust anchor from the verification path option of the PSBU message. Preferably, the verification path option specifies the way to identify and locate the trust anchor, such as by providing the fully qualified domain name (FQDN) of the trust anchor, or by providing the IP address of the trust anchor. With this, the correspondent entity can determine if it wants to trust this trust anchor in the first place, and if it does, the correspondent entity can contact the trust anchor to obtain the means for verifying the signature portion of the router certificate. This may preferably include the public key of the trust anchor for decrypting a signature portion that is construed from the encryption of a cryptographic checksum of the information portion.

Alternatively, the correspondent entity may pass the verification task to some other nodes. For instance, a trust anchor TA 122 in Fig. 1 may be available to perform such verification task. This implicitly means that the correspondent entity trusts the trust anchor 122 to perform the verification process correctly. One way this may be achieved is that the trust anchor TA 122 is also the authority for issuing certificates in the domain where the correspondent entity resides. In another preferred deployment, there may be a global central authority that can verify signatures of different trust anchors. In the latter model, the entire internet infrastructure has a hierarchy of trust anchors to provide a chain of trust relationship, much the same way as how the current domain name resolution service is being deployed. Each trust anchor can verify the signature of any trust anchor below itself in the hierarchy. Hence, when the correspondent entity wishes to check the validity of a signature, it forwards the signature plus the contents, or part thereof, of the received verification path option to the trust anchor in its domain. If the trust anchor can verify the validity of the signature, the trust anchor will respond to the correspondent entity. Else, the trust anchor will pass it to its next higher-level trust anchor for verification. This process is repeated until a trust anchor in the hierarchy is able to provide a response.

Before sending a PSBU message to a correspondent entity, the mobile router MR 140 should preferably complete the return routability (RR) procedure. This is because the use of the router certificate only verifies its claims of managing the network prefixes specified in the PSBU message. The return routability would still be needed to allow the correspondent entity to verify the collocation of the CoA and HoA of MR 140 as specified in the PSBU message.

Alternatively, the RR procedure may be omitted if the access network 104, where the mobile router MR 140 is currently attached, provides a trust anchor TA 124. In this case, the mobile router MR 140 can obtain an address certificate from the trust anchor TA 124 to verify MR 140's ownership of its current CoA. This can be done in many ways. One preferable approach is to use the Neighbor Discovery options as specified in [Non-Patent Document 3] to disseminate such an address certificate. Mobile router MR 140 can attach the address certificate, part thereof, or a derivative of the address certificate, in the PSBU message as well. This way, the return routability procedure may be omitted since the recipient (i.e. correspondent entity) can verify all information contained in the PSBU message. The HoA of MR 140 and the network prefixes specified can be verified using the router certificate. The CoA of MR 140 can be verified using the address certificate issued by TA 124.

Since the present invention discloses a new mechanism where the correspondent entity can verify information contained in a PSBU message, some fallback mechanism is necessary to allow a graceful degradation in case MR 140 contacts a correspondent entity that does not understand certificates in PSBU. One preferred way to do this is for the mobile router MR 140 to initiate a capability exchange procedure with the correspondent entity. During the capability exchange, the mobile router MR 140 and correspondent entity will notify each other what kind of extra capabilities they possess, such as the ability to use router certificate to verify mobile network prefix options, the ability to use address certificate to verify CoA, so on and so forth. This way, the mobile router MR 140 and the correspondent entity will know each other's capabilities, and they can choose from a set of common capabilities they both possess.

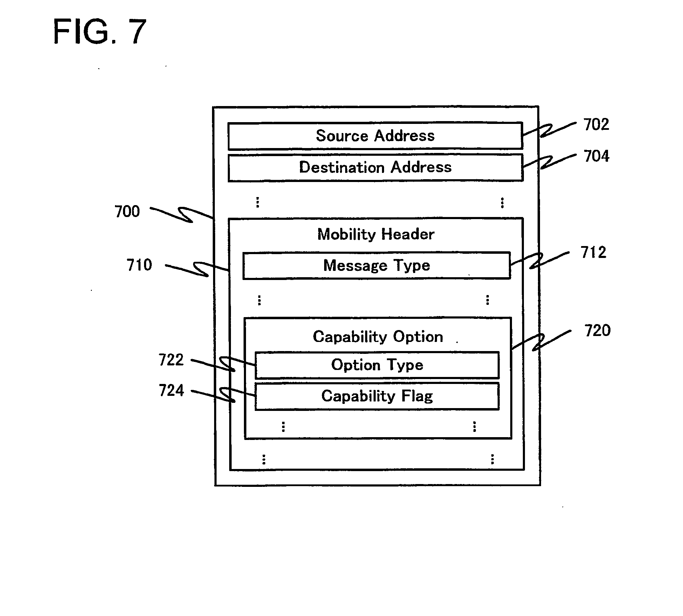

The more astute readers will recognize that having an extra step of capabilities exchange procedure will incur additional round trip delay, since the mobile router and the correspondent entity will need to send at least one packet to each other. For this reason, it is preferable that the capabilities exchange be done at the same time the return routability procedure is performed. One way to accomplish this is to have the capabilities embedded into HoTI and HoT messages (or alternatively, the capabilities can be embedded into the CoTI and CoT messages). Fig. 7 shows the message format for doing so. The message 700 can be any one of the HoTI, HoT, CoT or CoTI message, with the appropriate source address field 702 and destination address field 704. The message contains the mobility header 710, with a message type field 712 identifying this message as any one of the HoTI, HoT, CoTI or CoT message. The present invention introduces a new capability option 720 to be inserted into the mobility header 710. Within this new capability option 720, there is the option type field 722 identifying this option as the capability option, and one or more capability flag fields 724. The capability flag field 724 describes the capability of the sender. Each capability may be assigned a unique code, and the inclusion of the code in the capability flag field 724 indicates that the sender has the associated capability. Alternatively, each bit in the capability flag field 724 may correspond to a specific capability. The setting of a bit in the capability flag field 724 indicates that the sender possesses the corresponding capability.

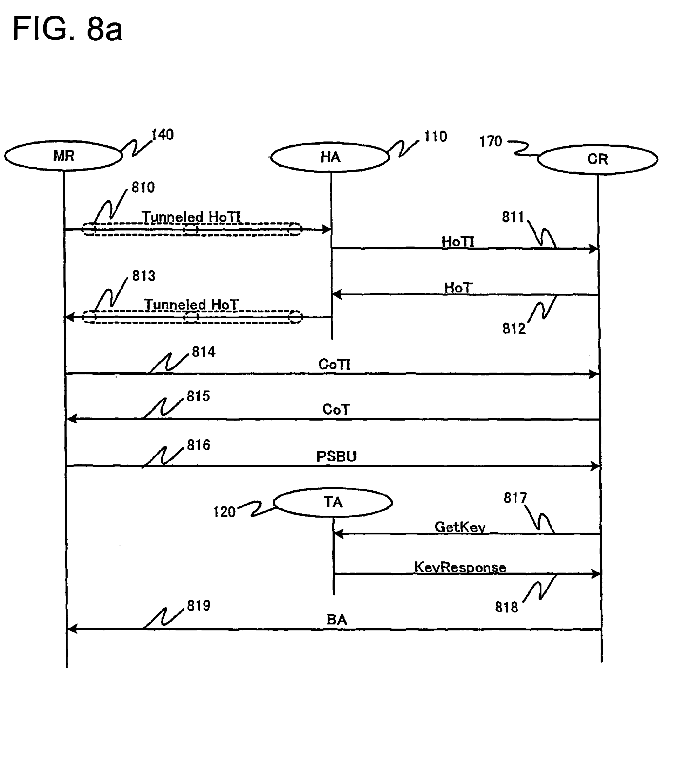

For instance, consider the scenario where mobile router MR 140 wishes to establish a route optimization session with correspondent router CR 170. Fig. 8a shows the message sequence diagram where correspondent router CR 170 implements the capability to verify PSBU messages with router certificate. First, MR 140 initiates the return routability procedure with capability exchange by sending a HoTI message to CR 170. Since HoTI messages should bear the home-address of the sender, it is tunneled to the home agent of MR 140, HA 110. This is shown in Fig. 8a as the tunneled HoTI message 810. HA 110 will decapsulate the packet and forward the HoTI message 811 to CR 170. In this HoTI message 811, MR 140 will indicate its capability of including router certificate for verification of network prefixes information, including address certificate for verification of CoA, and using the extended return routability procedure (such as the one disclosed in [Non-Patent Document 4]) for verification of PSBU information. When CR 170 receives this HoTI message 811, it responds with a HoT message 812. Since the received HoTI message 811 includes a capability option, CR 170 will also include a new capability option in the HoT message 812 as well. Here, CR 170 will indicate that it is only capable of using router certificate to verify network prefix information. The HoT message 812 is sent to the HoA of MR 140, and will thus be intercepted by the home agent HA 110, which will forward the message in a tunnel packet 813 to the CoA of MR 140.

Since the HoT message 813 indicates that CR 170 only has the capability to verify network prefixes using router certificate, MR 140 has to complete the return routability procedure by sending the CoTI message 814, so that CR 170 can verify the CoA of MR 140 using the legacy means provided by the return routability procedure. CR 170 will respond to the CoTI message 814 with a CoT message 815. This completes the return routability procedure, and MR 140 can now send a PSBU message 816 to CR 170, along with the router certificate and tokens derived from the HoT message 812 and CoT message 815. CR 170 upon receiving this PSBU message 816, will verify the contents of the PSBU message 816 before accepting the bindings specified. This includes verifying the collocation of the CoA and HoA specified in the PSBU message 816 by checking the necessary tokens, as in standard return routability procedure. CR 170 will also need to verify the contents of the certificate option and network prefix option included in the PSBU message 816. For this, as an example, CR 170 may need to obtain the public key of the trust anchor TA 120 identified in the certificate option. To do so, CR 170 contacts TA 120 to request for its public key, as illustrated in Fig. 8a by the GetKey message 817. TA 120 replies with its public key in the KeyResponse message 818. With the public key of TA 120, CR 170 can verify the network prefix specified in PSBU message 816 is indeed managed by MR 140. Thus, CR 170 accepts the binding update, and responds with a binding acknowledgement message BA 819.

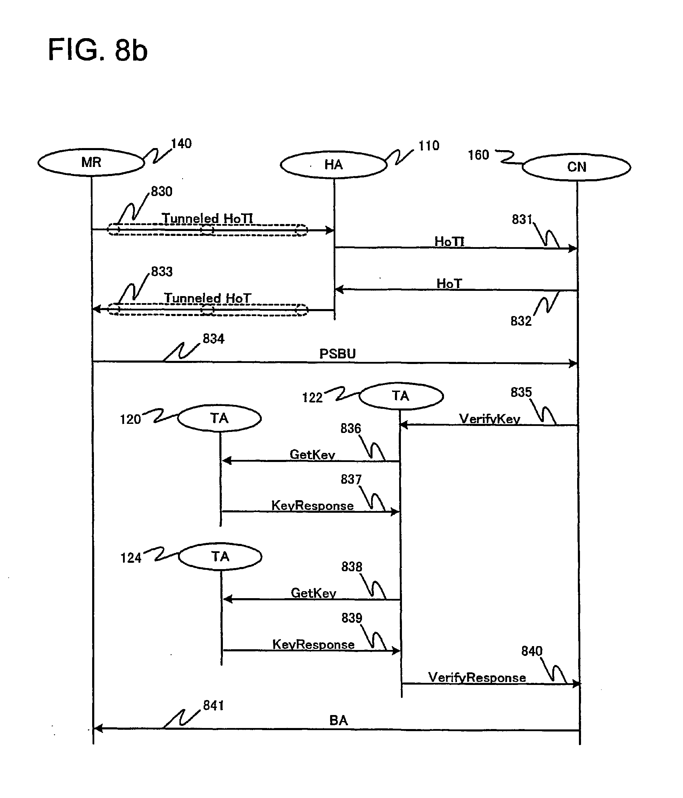

Fig. 8a illustrates an example where the correspondent entity (CR 170) supports only verification by router certificate. Fig. 8b shows an example where the correspondent entity (CN 160) supports verification by router certificate and address certificate. First, MR 140 initiates the return routability procedure with capability exchange by sending a HoTI message to CN 160. Since HoTI messages should bear the home-address of the sender, it is tunneled to the home agent of MR 140, HA 110. This is shown in Fig. 8b as the tunneled HoTI message 830. HA 110 will decapsulate the packet and forward the HoTI message 831 to CN 160. In this HoTI message 831, MR 140 indicates its capability of including router certificate for verification of network prefixes information, including address certificate for verification of CoA, and using the extended return routability procedure (such as the one disclosed in [Non-Patent Document 4]) for verification of PSBU information. When CN 160 receives this HoTI message 831, it responds with a HoT message 832. Since the received HoTI message 831 includes a capability option, CN 160 will also include a new capability option in the HoT message 832 as well. Here, CN 160 indicates that it is capable of using router certificate to verify network prefix information and using address certificate to verify validity of CoA. The HoT message 832 is sent to the HoA of MR 140, and will thus be intercepted by the home agent HA 110, which will forward the message in a tunnel packet 833 to the CoA of MR 140.

Since the HoT message 833 indicates that CN 160 has the capability to verify network prefixes using router certificate and verify CoA using address certificate, MR 140 does not have to complete the return routability procedure. Instead, MR 140 sends PSBU message 834 to CN 160, along with certificate options containing the router certificate signed by TA 120 and address certificate signed by TA 124. Upon receiving the PSBU message 834, CN 160 proceeds with verification of PSBU message. In this example, we illustrate the case where CN 160 employs the services of TA 122 to perform the actual verification on its behalf. This is illustrated by CN 160 sending a VerifyKeys message 835 to TA 122 in Fig. 8b. Within the message 835, CN 160 includes the router certificate and address certificate that need to verified. TA 122, upon receiving this request message 835, proceeds to fetch the public keys of the identified trust anchors, TA 120 and TA 124. This is shown in Fig. 8b as the GetKey messages 836 and 838. Once the public keys are obtained from TA 120 and TA 124 via the KeyResponse messages 837 and 839 respectively, TA 122 proceeds to verify the validity of the certificates. The results are then returned to CN 160 in the VerifyResponse message 840. Assuming the certificates are verified to be authentic, CN 160 accepts the bindings specified in the PSBU message 834, and responds with a binding acknowledgement message BA 841.

Notice that Fig. 8b shows TA 122 contacting TA 124 after obtaining the key from TA 120. This is only for explanation purposes. A person skilled in the art will appreciate that in practice the GetKey messages 836 and 838 can be transmitted at the same time. In addition, both the examples illustrated in Fig. 8a and Fig. 8b assume that the entity performing the verification process (i.e. CR 170 and TA 122) does not possess any cached copies of public keys. In actual practice, any node needing to perform verification of signatures may already have the relevant public keys in possession (such as through the cached copy of a previous verification). In such cases, the steps illustrated in the figures where the public key is fetched from the key owners are redundant. Furthermore, in a deployment scenario where a public key infrastructure is available, such that a central authority can sign against public keys to verify their authenticity, the mobile router MR 140 may provide the public keys of the trust anchors signed by the central authority to save the correspondent entity the need for fetching the keys on its own.

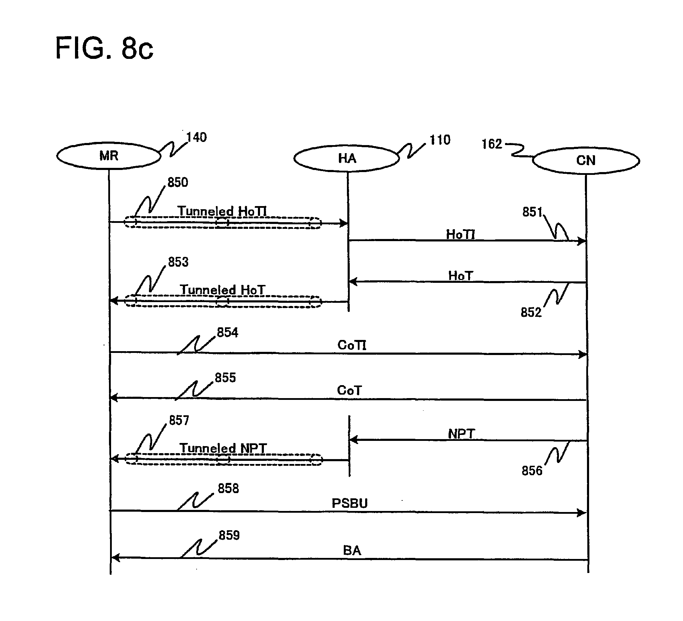

In the previous examples shown in Fig. 8a and Fig. 8b, the correspondent entities all support some capabilities of verification using certificates from trust anchors. Fig. 8c illustrates a scenario where the correspondent entity (CN 162) only support return routability based verification procedure, such as the Return Routability for Network Prefix (RRNP) described in [Non-Patent Document 4]. First, MR 140 initiates the RRNP procedure with capability exchange by sending a HoTI message to CN 162. Since HoTI messages should bear the home-address of the sender, it is tunneled to the home agent of MR 140, HA 110. This is shown in Fig. 8c as the tunneled HoTI message 850. HA 110 will decapsulate the packet and forward the HoTI message 851 to CN 162. In this HoTI message 851, MR 140 will indicate its capability of including router certificate for verification of network prefixes information, including address certificate for verification of CoA, and using the RRNP procedure for verification of PSBU information. When CN 162 receives this HoTI message 851, it responds with a HoT message 852. Since the received HoTI message 851 includes a capability option, CN 162 will also include a new capability option in the HoT message 852 as well. Here, CN 162 will indicate that it is capable of using RRNP to verify network prefix information. The HoT message 852 is sent to the HoA of MR 140, and will thus be intercepted by the home agent HA 110, which will forward the message in a tunnel packet 853 to the CoA of MR 140.

Since the HoT message 852 indicates that CN 162 is only capable of using RRNP to verify the contents of a PSBU message, MR 140 completes the RRNP procedure by sending the CoTI message 854 to CN 162. CN 162 responds to this CoTI message with a CoT message 855. In addition, according to the RRNP specification, CN 162 also sends a Network Prefix Test message NPT 856 to test the validity of the network prefix specified in the HoTI message 851. This NPT message 856 will be sent to a random address chosen from the network prefix specified in HoTI message 851, and MR 140 must intercept this NPT message 856 to prove its ownership of the network prefix. Since the NPT message 856 has a destination address from the network prefix of the mobile network 104, it is first intercepted by HA 110. HA 110 then forwards the NPT message 856 to the CoA of MR 140 in the tunnel packet 857.

Once MR 140 has received all the RRNP messages HoT 853, CoT 855 and NPT 857, it can derive the necessary security tokens to be included in the PSBU message 858 to be transmitted to CN 162. This completes the RRNP procedure, and CN 162 will then respond with a binding acknowledgement message BA 859.

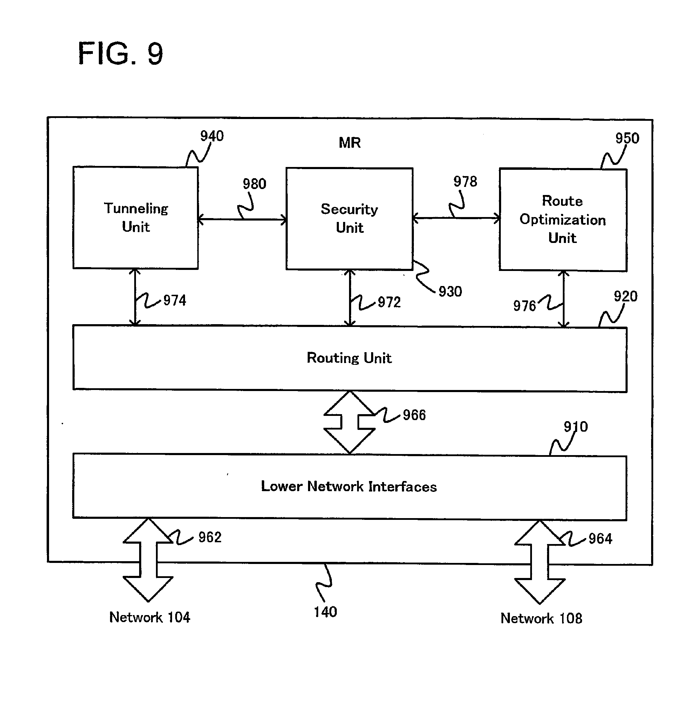

Fig. 9 shows the preferred functional architecture of mobile router MR 140 according to the present invention, comprising a Lower Network Interface 910, a Routing Unit 920, a Security Unit 930, a Tunneling Unit 940 and a Route Optimization Unit 950.
The Lower Network Interface 910 is a functional block that represents all networking hardware, software and protocols that are necessary to allow the MR 140 to communicate with other nodes on a packet-switched data communication network. For instances, under the International Standards Organization's (ISO) Open System Interconnect (OSI) 7-layers model, the Lower Network Interface 910 will encompass the Physical and Data Link Layers. Packets received from network 104 or 108 will go through the packet paths 962 or 964 to be processed by the Lower Network Interface 910. If the packet is intended for MR 140 by the physical address, it will be passed to the Routing Unit 920 via packet path 966.

The Routing Unit 920 handles all processing with respect to routing in the internetworking layer. Under the OSI model, it encompassed all functionalities of Network Layer. The Routing Unit 920 is responsible for forwarding packets to their next hops based on their final destinations. To do its work correctly, the Routing Unit 920 will need to consult the Tunneling Unit 940 and Route Optimization Unit 950 via the signal paths 974 and 976. This includes checking if the packets should go through any bi-directional tunnel, or the packet should go through a route optimization session.

The Tunneling Unit 940 is responsible for setting up and maintaining bi-directional tunneling between the mobile router MR 140 and its home agent. When a route optimization session requires the establishment of bi-directional tunnels as well, the Tunneling Unit 940 is also responsible for establishing and maintaining such tunnels.

The Security Unit 930 is responsible for maintaining certificates obtained by the mobile router MR 140, and generating certificates of mobile router MR 140 where necessary. The certificates maintained by the Security Unit 930 should include, but not limited to, router certificates obtained from trust anchors of the home domain of the mobile router MR 140, and address certificates obtained from the trust anchors of foreign access network the mobile router 140 is currently attached to.

The Route Optimization Unit 950 is responsible for establishing and maintaining route optimization sessions between the mobile router MR 140 and correspondent entities. This includes determining if route optimization is desired for a given correspondent node, detecting capabilities of correspondent entities, establishing route optimization based on the capabilities of the correspondent entities, and sending renewal PSBU messages to maintain ongoing route optimization sessions.

Although the invention has been herein shown and described in what is conceived to be the most practical and preferred embodiment, it will be appreciated by those skilled in the art that various modifications may be made in details of design and parameters without departing from the scope and ambit of the invention. For example, the use of router certificate to verify validity of network prefixes in PSBU messages has been described in the present invention to be employed by mobile routers. A person skilled in the art will appreciate that the same concept may be used whenever there is a need for a remote entity to verify the ownership of prefixes. For instance, in Fig. 1, the correspondent router CR 170 may claim to mobile routers and mobile nodes that it is capable of performing route optimization on behalf of any correspondent nodes within the correspondent network 106. For this claim, the correspondent router CR 170 may specify that it is capable of managing route optimization sessions with any address falling within the network prefix of correspondent network 106. Mobile routers and mobile nodes receiving such claim may desire to verify that the prefix of correspondent network 106 is indeed managed by the correspondent router using techniques disclosed within the present invention.

## Claims

1. A system of communication nodes in a packet-switched data communication network comprising a mobile router (140) managing a mobile network (108), being so arranged that in order to establish route optimization for a communication session between a node (150) in the mobile network (108) with a correspondent node (162) outside the mobile network (108), the mobile router (140) is adapted for sending a binding update message to an external entity (170), the binding update message comprising a home address of the mobile router (140), a care-of address of the mobile router (140), and an address prefix or prefixes of the mobile network (108),
**characterized in that**
the binding update message further comprises a verification parameter allowing the external entity (170) to verify that a sender of the binding update message is an authentic owner of a specified address prefix or prefixes of the mobile network (108), and verification path information containing information necessary for recipients of the binding update message to obtain verification of the verification parameter.

2. A system according to claim 1, wherein said verification parameter is a cryptographic certificate, a part of a cryptographic certificate or a derivation of a cryptographic certificate, said cryptographic certificate is issued by a trust anchor, **characterized in that** the cryptographic certificate comprises an information portion containing the identification of the mobile router (140) and the ownership of the address prefix or prefixes of the mobile network (108) by the mobile router (140), and a signature portion containing a cryptographically generated checksum of the information portion, being so arranged that other nodes can verify the validity of the information portion from the signature portion, but cannot generate the signature portion from the information portion.

3. A system according to claim 2, wherein the mobile router (140) is adapted for obtaining said cryptographic certificate by (i) having the cryptographic certificate manually configured and stored in the mobile router (140); (ii) having the mobile router (140) perform an existing, suitable protocol over the bidirectional tunnel it establishes with its home agent to retrieve the cryptographic certificate from the trust anchor; (iii) having the mobile router (140) embed a signal in the binding update message sent to its home agent, being so arranged that the home agent upon detecting such a signal, will retrieve the cryptographic certificate from the trust anchor and transmit the retrieved certificate within the binding acknowledgement that is transmitted back to the mobile router (140); or (iv) having the cryptographic certificate transmitted to the mobile router (140) together with the prefix information when the mobile router (140) requests for prefix delegation from its home network.

4. A system according to claim 2, wherein the external entity (170) is adapted for verifying a binding update message received from the mobile router (140) by checking if the address prefix or prefixes specified in the binding update message matches that specified in the information portion of the cryptographic certificate, by retrieving a key from the trust anchor identified by the verification path information contained in the binding update message, and by using the key to check the validity of the cryptographic certificate.

5. A system according to claim 2, wherein the external entity (170) is adapted for verifying a binding update message received from the mobile router (140) by deriving the information portion of the cryptographic certificate based on the address prefix or prefixes specified in the binding update message, by retrieving a key from the trust anchor identified by the verification path information contained in the binding update message, and by using the key to check the validity of the derived information portion of the cryptographic certificate based on the signature portion of the cryptographic certificate.

6. A system according to claim 2, wherein the external entity (170) is adapted for verifying a binding update message received from the mobile router (140) by contacting a third party to perform the verification of cryptographic certificates, or derived parameters of the cryptographic certificates, contained in the binding update message, and wherein the third party is adapted for performing the verification on behalf of the external entity (170) and for notifying the external entity (170) of a result of the verification.

7. A system according to any of claims 1 to 6, wherein the mobile router (140) is adapted for embedding descriptions of its capabilities into a packet sent to a correspondent node (162) for the establishment of route optimization session, being so arranged that the descriptions of mobile router's (140) capabilities include the methods supported by the mobile router (140) to allow the correspondent node (162) to verify the address prefix or prefixes claimed to be owned by the mobile router (140).

8. A system according to claim 7, wherein a communication node, upon receiving a packet sent by the mobile router (140) containing descriptions of the capabilities of the mobile router (140), is adapted for responding with a packet containing the capabilities of said communication node, being so arranged that the descriptions of communication node's capabilities include the methods supported by the communication node to verify the address prefix or prefixes claimed to be owned by the mobile router (140).

9. A method for route optimization in a system of communication nodes in a packet-switched data communication network, said route optimization being established between a node (150) in a mobile network (108) and a correspondent node (162) outside the mobile network (108), the mobile network (108) being managed by a mobile router (140), said method comprising the step of
sending, by the mobile router (140) to an external entity (170), a binding update message comprising a home address of the mobile router (140), a care-of address of the mobile router (140), and an address prefix or prefixes of the mobile network (108),
**characterized in that**
the binding update message further comprises a verification parameter allowing the external entity (170) to verify that a sender of the binding update message is an authentic owner of a specified address prefix or prefixes of the mobile network (108), and verification path information containing information necessary for recipients of the binding update message to obtain verification of the verification parameter.

10. A method according to claim 9, wherein said verification parameter is a cryptographic certificate, a part of a cryptographic certificate or a derivation of a cryptographic certificate, said cryptographic certificate being issued by a trust anchor, and
wherein said cryptographic certificate comprises an information portion containing the identification of the mobile router (140) and the ownership of the address prefix or prefixes of the mobile network (108) by the mobile router (140), and a signature portion containing a cryptographically generated checksum of the information portion, being so arranged that other nodes can verify the validity of the information portion from the signature portion, but cannot generate the signature portion from the information portion.

11. A method according to claim 10, further comprising the step of obtaining, by the mobile router (140), said cryptographic certificate by (i) having the cryptographic certificate manually configured and stored in the mobile router (140); (ii) having the mobile router (140) perform an existing, suitable protocol over the bidirectional tunnel it establishes with its home agent to retrieve the cryptographic certificate from the trust anchor; (iii) having the mobile router (140) embed a signal in the binding update message sent to its home agent, being so arranged that the home agent upon detecting such a signal, will retrieve the cryptographic certificate from the trust anchor and transmit the retrieved certificate within the binding acknowledgement that is transmitted back to the mobile router (140); or (iv) having the cryptographic certificate transmitted to the mobile router (140) together with the prefix information when the mobile router (140) requests for prefix delegation from its home network.

12. A method according to claim 11, further comprising the step of verifying a binding update message received at the external unit (170) from the mobile router (140) by checking if the address prefix or prefixes specified in the binding update message matches that specified in the information portion of the cryptographic certificate, by retrieving a key from the trust anchor identified by the verification path information contained in the binding update message, and by using the key to check the validity of the cryptographic certificate.

13. A method according to claim 11, further comprising the step of verifying a binding update message received at the external unit (170) from the mobile router (140) by deriving the information portion of the cryptographic certificate based on the address prefix or prefixes specified in the binding update message, by retrieving a key from the trust anchor identified by the verification path information contained in the binding update message, and by using the key to check the validity of the derived information portion of the cryptographic certificate based on the signature portion of the cryptographic certificate.

14. A method according to claim 11, further comprising the step of verifying a binding update message received at the external unit (170) from the mobile router (140) by contacting a third party to perform the verification of cryptographic certificates, or derived parameters of the cryptographic certificates, contained in the binding update message, and wherein the third party is adapted for performing the verification on behalf of the external entity (170) and for notifying the external entity (170) of a result of the verification.

15. A method according to any of claims 10 to 14, further comprising the step of embedding, by the mobile router (140), descriptions of its capabilities into a packet sent to a correspondent node (162) for the establishment of route optimization session, being so arranged that the descriptions of mobile router's (140) capabilities include the methods supported by the mobile router (140) to allow the correspondent node (162) to verify the address prefix or prefixes claimed to be owned by the mobile router (140).

16. A method according to claim 15, further comprising the step of responding, upon receiving a packet sent by the mobile router (140) containing descriptions of the capabilities of the mobile router (140) at a communication node, with a packet containing the capabilities of said communication node, being so arranged that the descriptions of communication node's capabilities include the methods supported by the communication node to verify the address prefix or prefixes claimed to be owned by the mobile router (140).

17. A mobile router (140) for managing a mobile network (108) in a system of communication nodes in a packet-switched data communication network, being so arranged that in order to establish route optimization for a communication session between a node (150) in the mobile network (108) with a correspondent node (162) outside the mobile network (108), the mobile router (140) is adapted for sending a binding update message to an external entity (170), the binding update message comprising a home address of the mobile router (140), a care-of address of the mobile router (140), and an address prefix or prefixes of the mobile network (108), **characterized in that**
the binding update message further comprises a verification parameter allowing the external entity (170) to verify that a sender of the binding update message is an authentic owner of a specified address prefix or prefixes of the mobile network (108), and verification path information containing information necessary for recipients of the binding update message to obtain verification of the verification parameter.

18. A mobile router (140) according to claim 17, wherein said verification parameter is a cryptographic certificate, a part of a cryptographic certificate or a derivation of a cryptographic certificate, said cryptographic certificate is issued by a trust anchor, **characterized in that** the cryptographic certificate comprises an information portion containing the identification of the mobile router (140) and the ownership of the address prefix or prefixes of the mobile network (108) by the mobile router (140), and a signature portion containing a cryptographically generated checksum of the information portion, being so arranged that other nodes can verify the validity of the information portion from the signature portion, but cannot generate the signature portion from the information portion.

19. A mobile router (140) according to claim 18, being further adapted for obtaining said cryptographic certificate by (i) manually configuring and storing the cryptographic certificate in the mobile router (140); (ii) performing an existing, suitable protocol over the bidirectional tunnel it establishes with its home agent to retrieve the cryptographic certificate from the trust anchor; (iii) embedding a signal in the binding update message sent to its home agent, being so arranged that the home agent upon detecting such a signal, will retrieve the cryptographic certificate from the trust anchor and transmit the retrieved certificate within the binding acknowledgement that is transmitted back to the mobile router (140); or (iv) having the cryptographic certificate transmitted to the mobile router (140) together with the prefix information when the mobile router (140) requests for prefix delegation from its home network.

20. A mobile router (140) according to any of claims 17 to 19, being further adapted for embedding descriptions of its capabilities into a packet sent to a correspondent node (162) for the establishment of route optimization session, being so arranged that the descriptions of mobile router's (140) capabilities include the methods supported by the mobile router (140) to allow the correspondent node (162) to verify the address prefix or prefixes claimed to be owned by the mobile router (140).

21. A mobile router (140) according to any of claims 17 to 20, comprising
a Lower Network Interface representing all networking hardware, software and protocols that are necessary to allow the mobile router (140) to communicate with other nodes on a packet-switched data communication network,
a Routing Unit that handles all processing with respect to routing in the internetworking layer,
a Tunneling Unit that is responsible for setting up and maintaining bidirectional tunneling between the mobile router (140) and its home agent, and the establishment and maintenance of bidirectional tunnel for a route optimization session,
a Security Unit that is responsible for maintaining certificates obtained by the mobile router (140), and generating certificates of that mobile router (140) where necessary, and
a Route Optimization Unit that is responsible for establishing and maintaining the route optimization session between the mobile router (140) and other communication nodes outside the mobile network (108) managed by the mobile router (140).

## Patentansprüche

1. System von Kommunikationsknoten in einem paketvermittelten Datenkommunikationsnetzwerk mit einem mobilen Router (140), der ein mobiles Netzwerk (108) verwaltet, das so eingerichtet ist, dass zur Etablierung einer Routenoptimierung für eine Kommunikationssitzung zwischen einem Knoten 150 in dem mobilen Netzwerk (108) mit einem Korrespondenzknoten (152) außerhalb des mobilen Netzwerks (108) der mobile Router (140) dazu eingerichtet ist, eine Bindungsaktualisierungsnachricht an eine externe Einheit (170) zu senden, wobei die Bindungsaktualisierungsnachricht eine primäre globale Adresse (home address) des mobilen Routers (140), eine temporäre globale Adresse (care-of address) des mobilen Routers (140) und ein Adresspräfix oder Präfixe des mobilen Netzwerks (108) enthält,
**dadurch gekennzeichnet, dass**
die Bindungsaktualisierungsnachricht des Weiteren einen Verifikationsparameter, der es der externen Einheit (170) erlaubt, zu überprüfen, ob ein Sender der Bindungsaktualisierungsnachricht ein authentischer Besitzer eines angegebenen Adresspräfix oder Präfixe des mobilen Netzwerks (108) ist, und Überprüfungspfadinformationen, die Informationen enthalten, die für Empfänger der Bindungsaktualisierungsnachricht erforderlich sind, um eine Überprüfung des Überprüfungsparameters zu erhalten, umfasst.

2. System nach Anspruch 1, wobei der Überprüfungsparameter ein kryptografisches Zertifikat, ein Teil eines kryptografischen Zertifikats oder ein Derivat eines krypotografischen Zertifikats ist, wobei das kryptografische Zertifikat durch einen Vertrauensanker herausgegeben wird, **dadurch gekennzeichnet, dass** das kryptografische Zertifikat einen Informationsabschnitt, der die Identifikation des mobilen Routers (140) und die Eigentümerschaft des Adresspräfix oder der Präfixe des mobilen Netzwerks (108) durch den mobilen Router (140) enthält, und einen Signaturabschnitt umfasst, der eine kryptografisch erzeugte Prüfsumme des Informationsabschnitts enthält, die so eingerichtet ist, dass andere Knoten die Gültigkeit des Informationsabschnitts aus dem Signaturabschnitt überprüfen können, aber den Signaturabschnitt nicht aus dem Informationsabschnitt erzeugen können.

3. System nach Anspruch 2, wobei der mobile Router (140) dazu eingerichtet ist, das kryptografische Zertifikat zu bekommen, indem (i) das kryptografische Zertifikat manuell in dem mobilen Router (140) konfiguriert und gespeichert wird; (ii) der mobile Router (140) veranlasst wird, ein bestehendes, geeignetes Protokoll über den bidirektionalen Tunnel auszuführen, den er mit seinem Heimatagenten (home agent) zum Abrufen des kryptografischen Zertifikats von dem Vertrauensanker etabliert; (iii) der mobile Router (140) veranlasst wird, ein Signal in die Bindungsaktualisierungsnachricht einzubetten, die er an seinen Heimatagenten sendet, das so eingerichtet ist, dass der Heimatagent bei Erfassung eines derartigen Signals das kryptografische Zertifikat von dem Vertrauensanker abruft und das abgerufene Zertifikat innerhalb der Bindungsbestätigung, die an den mobilen Router (140) zurück übertragen wird, übermittelt; oder (iv) veranlasst wird, dass das kryptografische Zertifikat an den mobilen Router (140) zusammen mit der Präfixinformation übertragen wird, wenn der mobile Router (140) eine Präfixdelegation von seinem Heimatnetzwerk anfordert.

4. System nach Anspruch 2, wobei die externe Einheit (170) dazu eingerichtet ist, eine von dem mobilen Router (140) empfangene Bindungsaktualisierungsnachricht zu überprüfen, indem überprüft wird, ob das Adresspräfix oder die Präfixe, die in der Bindungsaktualisierungsnachricht angegeben sind, mit den in dem Informationsabschnitt des kryptografischen Zertifikats angegebenen übereinstimmen, ein Schlüssel von dem Vertrauensanker, der durch die in der Bindungsaktualisierungsnachricht enthaltene Überprüfungspfadinformation angegeben wird, abgerufen wird, und der Schlüssel zur Überprüfung der Gültigkeit des kryptografischen Zertifikats verwendet wird.

5. System nach Anspruch 2, wobei die externe Einheit (170) dazu eingerichtet ist, eine von dem mobilen Router (140) empfangene Bindungsaktualisierungsnachricht zu überprüfen, in dem der Informationsabschnitt des kryptografischen Zertifikats auf Basis des Adresspräfix oder der Präfixe, die in der Bindungsaktualisierungsnachricht angegeben sind, abgeleitet wird, ein Schlüssel von dem Vertrauensanker, der durch die in der Bindungsaktualisierungsnachricht enthaltene Überprüfungspfadinformation angegeben wird, abgerufen wird, und der Schlüssel zur Überprüfung der Gültigkeit des abgeleiteten Informationsabschnitts des kryptografischen Zertifikats auf Basis des Signaturabschnitts des kryptografischen Zertifikats verwendet wird.

6. System nach Anspruch 2, wobei die externe Einheit (170) dazu eingerichtet ist, eine von dem Router (140) empfangene Bindungsaktualisierungsnachricht zu überprüfen, indem ein Dritter kontaktiert wird, um die Überprüfung des kryptografischen Zertifikats oder der von dem kryptografischen Zertifikat abgeleiteten Parameter, die in der Bindungsaktualisierungsnachricht enthalten sind, durchzuführen, und wobei der Dritte dazu eingerichtet ist, die Überprüfung im Auftrag der externen Einheit (170) durchzuführen und die externe Einheit (170) über ein Ergebnis der Überprüfung zu benachrichtigen.

7. System nach einem der Ansprüche 1 bis 6, wobei der mobile Router (140) dazu eingerichtet ist, Beschreibungen seiner Fähigkeiten in ein Paket einzubetten, das an einen Korrespondenzknoten (162) zur Etablierung einer Routenoptimierungssitzung gesendet wird, wobei die Beschreibung der Fähigkeiten des mobilen Routers (140) die durch den mobilen Router (140) unterstützten Verfahren enthält, um es dem Korrespondenzknoten (162) zu ermöglichen, das Adresspräfix oder die Präfixe, deren Eigentümerschaft von dem mobilen Router (140) beansprucht wird, zu überprüfen.

8. System nach Anspruch 7, wobei ein Kommunikationsknoten beim Empfang eines von dem mobilen Router (140) gesendeten Pakets, das Beschreibungen der Fähigkeiten des mobilen Routers (140) enthält, dazu eingerichtet ist, mit einem Paket zu antworten, das die Fähigkeiten des Kommunikationsknotens enthält, und so eingerichtet ist, dass die Beschreibungen der Fähigkeiten des Kommunikationsknotens die durch den Kommunikationsknoten unterstützten Verfahren zur Überprüfung des Adresspräfix oder der Präfixe, deren Eigentümerschaft durch den mobilen Router (140) beansprucht werden, enthalten.

9. Verfahren zur Routenoptimierung in einem System von Kommunikationsknoten in einem paketvermittelten Datenkommunikationsnetzwerk, wobei die Routenoptimierung zwischen einem Knoten (150) in einem mobilen Netzwerk (108) und einem Korrespondenzknoten (162) außerhalb des mobilen Netzwerks (108) etabliert wird, das mobile Netzwerk (108) durch einen mobilen Router (140) verwaltet wird und das Verfahren die folgenden Schritte umfasst:
Senden, durch den mobilen Router (140), einer Bindungsaktualisierungsnachricht an eine externe Einheit (170), wobei die Bindungsaktualisierungsnachricht eine primäre globale Adresse (home address) des mobilen Routers (140), eine temporäre globale Adresse (care-of address) des mobilen Routers (140) und ein Adresspräfix oder Präfixe des mobilen Netzwerks (108) umfasst,
**gekennzeichnet dadurch, dass**
die Bindungsaktualisierungsnachricht des Weiteren einen Verifikationsparameter, der es der externen Einheit (170) erlaubt, zu überprüfen, ob ein Sender der Bindungsaktualisierungsnachricht ein authentischer Besitzer eines angegebenen Adresspräfix oder Präfixe des mobilen Netzwerks (108) ist, und Überprüfungspfadinformationen, die Informationen enthalten, die für Empfänger der Bindungsaktualisierungsnachricht erforderlich sind um eine Überprüfung des Überprüfungsparameters zu erhalten, umfasst.

10. Verfahren nach Anspruch 9, wobei der Überprüfungsparameter ein kryptografisches Zertifikat, ein Teil eines kryptografischen Zertifikats oder ein Derivat eines kryptografischen Zertifikats ist, wobei das kryptografische Zertifikat durch einen Vertrauensanker herausgegeben wird, und
wobei das kryptografische Zertifikat einen Informationsabschnitt, der die Identifikation des mobilen Routers (140) und die Eigentümerschaft des Adresspräfix oder der Präfixe des mobilen Netzwerks (108) durch den mobilen Router (140) enthält, und einen Signaturabschnitt umfasst, der eine kryptografisch erzeugte Prüfsumme des Informationsabschnitts enthält, die so eingerichtet ist, dass andere Knoten die Gültigkeit des Informationsabschnitts aus dem Signaturabschnitt überprüfen können, aber den Signaturabschnitt nicht aus dem Informationsabschnitt erzeugen können.

11. Verfahren nach Anspruch 10, des Weiteren umfassend den folgenden Schritt:
Erhalten des kryptografischen Zertifikats durch den mobilen Router (140), in dem (i) das kryptografische Zertifikat manuell in dem mobilen Router (140) konfiguriert und gespeichert wird; (ii) in dem der mobile Router (140) veranlasst wird, ein bestehendes, geeignetes Protokoll über den bidirektionalen Tunnel auszuführen, den er mit seinem Heimatagenten (home agent) zum Abrufen des kryptografischen Zertifikats von dem Vertrauensanker etabliert; (iii) in dem der mobile Router (140) veranlasst wird, ein Signal in die Bindungsaktualisierungsnachricht einzubetten, die er an seinen Heimatagenten sendet, das so eingerichtet ist, dass der Heimatagent bei Erfassung eines derartigen Signals das kryptografische Zertifikat von dem Vertrauensanker abruft und das abgerufene Zertifikat innerhalb der Bindungsbestätigung, die an den mobilen Router (140) zurück übertragen wird, übermittelt; oder (iv) das kryptografische Zertifikat an den mobilen Router (140) zusammen mit der Präfixinformation übertragen wird, wenn der mobile Router (140) eine Präfixdelegation von seinem Heimatnetzwerk anfordert.

12. Verfahren nach Anspruch 11, des Weiteren umfassend den folgenden Schritt:
Überprüfen einer an der externen Einheit (170) empfangenen Bindungsaktualisierungsnachricht des mobilen Routers (140), indem überprüft wird, ob das Adresspräfix oder die Präfixe, die in der Bindungsaktualisierungsnachricht angegeben sind, mit den in dem Informationsabschnitt des kryptografischen Zertifikats angegebenen übereinstimmen, ein Schlüssel von dem Vertrauensanker, der durch die in der Bindungsaktualisierungsnachricht enthaltene Überprüfungspfadinformation angegeben wird, abgerufen wird, und der Schlüssel zur Überprüfung der Gültigkeit des kryptografischen Zertifikats verwendet wird.

13. Verfahren nach Anspruch 11, des Weiteren umfassend den Schritt:
Überprüfen einer an der externen Einheit (170) empfangenen Bindungsaktualisierungsnachricht des mobilen Routers (140), indem der Informationsabschnitt des kryptografischen Zertifikats auf Basis des Adresspräfix oder der Präfixe, die in der Bindungsaktualisierungsnachricht angegeben sind, abgeleitet wird, ein Schlüssel von dem Vertrauensanker, der durch die in der Bindungsaktualisierungsnachricht enthaltene Überprüfungspfadinformation angegeben wird, abgerufen wird, und der Schlüssel zur Überprüfung der Gültigkeit des abgeleiteten Informationsabschnitts des kryptografischen Zertifikats auf Basis des Signaturabschnitts des kryptografischen Zertifikats verwendet wird.

14. Verfahren nach Anspruch 11, des Weiteren umfassend den folgenden Schritt:
Überprüfen einer an der externen Einheit (170) empfangenen Bindungsaktualisierungsnachricht des mobilen Routers (140), indem ein Dritter kontaktiert wird, um die Überprüfung des kryptografischen Zertifikats oder der von dem kryptografischen Zertifikat abgeleiteten Parameter, die in der Bindungsaktualisierungsnachricht enthalten sind, durchzuführen, und wobei der Dritte dazu eingerichtet ist, die Überprüfung im Auftrag der externen Einheit (170) durchzuführen und die externe Einheit (170) über ein Ergebnis der Überprüfung zu benachrichtigen.

15. Verfahren nach einem der Ansprüche 10 bis 14, des Weiteren umfassend den folgenden Schritt:
Einbetten, durch den mobilen Router (140), von Beschreibungen seiner Fähigkeiten in ein Paket, das an einen Korrespondenzknoten (162) zur Etablierung einer Routenoptimierungssitzung gesendet wird, wobei die Beschreibungen der Fähigkeiten des mobilen Routers (140) die durch den mobilen Router (140) unterstützten Verfahren enthalten, um es dem Korrespondenzknoten (162) zu ermöglichen, das Adresspräfix oder die Präfixe, deren Eigentümerschaft von dem mobilen Router (140) beansprucht wird, zu überprüfen.

16. Verfahren nach Anspruch 15, des Weiteren umfassend den folgenden Schritt:
Antworten auf den Empfang eines von dem mobilen Router (140) gesendeten Pakets, das Beschreibungen der Fähigkeiten des mobilen Routers (140) enthält, an einem Kommunikationsknoten mit einem Paket, das die Fähigkeiten des Kommunikationsknotens enthält, und so eingerichtet ist, dass die Beschreibungen der Fähigkeiten des Kommunikationsknotens die durch den Kommunikationsknoten unterstützten Verfahren zur Überprüfung des Adresspräfix oder der Präfixe, deren Eigentümerschaft durch den mobilen Router (140) beansprucht werden, enthalten.

17. Mobiler Router (140) zur Verwaltung eines mobilen Netzwerks (108) in einem System von Kommunikationsknoten in einem paketvermittelten Datenkommunikationsnetzwerk, das so eingerichtet ist, dass zur Etablierung einer Routenoptimierung für eine Kommunikationssitzung zwischen einem Knoten (150) in dem mobilen Netzwerk (108) mit einem Korrespondenzknoten (162) außerhalb des mobilen Netzwerks (108) der mobile Router (140) dazu eingerichtet ist, eine Bindungsaktualisierungsnachricht an eine externe Einheit (170) zu senden, wobei die Bindungsaktualisierungsnachricht eine primäre globale Adresse des mobilen Routers (140) eine temporäre globale Adresse des mobilen Routers (140) und ein Adresspräfix oder Präfixe des mobilen Netzwerks (108) enthält, **dadurch gekennzeichnet, dass**
die Bindungsaktualisierungsnachricht des Weiteren einen Verifikationsparameter, der es der externen Einheit (170) erlaubt, zu überprüfen, ob ein Sender der Bindungsaktualisierungsnachricht ein authentischer Besitzer des angegebenen Adresspräfix oder der Präfixe des mobilen Netzwerks (108) ist, und Überprüfungspfadinformationen, die Informationen enthalten, die für Empfänger der Bindungsaktualisierungsnachricht erforderlich sind, um eine Überprüfung des Überprüfungsparameters zu erhalten, umfasst.

18. Mobiler Router (140) nach Anspruch 17, wobei der Überprüfungsparameter ein kryptografisches Zertifikat, ein Teil eines kryptografischen Zertifikats oder ein Derivat eines krypotografischen Zertifikats ist, wobei das kryptografische Zertifikat durch einen Vertrauensanker herausgegeben wird, **dadurch gekennzeichnet, dass** das kryptografische Zertifikat einen Informationsabschnitt, der die Identifikation des mobilen Routers (140) und die Eigentümerschaft des Adresspräfix oder der Präfixe des mobilen Netzwerks (108) durch den mobilen Router (140) enthält, und einen Signaturabschnitt umfasst, der eine kryptografisch erzeugte Prüfsumme des Informationsabschnitts enthält, die so eingerichtet ist, dass andere Knoten die Gültigkeit des Informationsabschnitts aus dem Signaturabschnitt überprüfen können, aber den Signaturabschnitt nicht aus dem Informationsabschnitt erzeugen können.

19. Mobiler Router (140) nach Anspruch 18, der des Weiteren dazu eingerichtet ist, das kryptografische Zertifikat zu bekommen, indem (i) das kryptografische Zertifikat manuell in dem mobilen Router (140) konfiguriert und gespeichert wird; (ii) der mobile Router (140) veranlasst wird, ein bestehendes, geeignetes Protokoll über den bidirektionalen Tunnel auszuführen, den er mit seinem Heimatagenten (home agent) zum Abrufen des kryptografischen Zertifikats von dem Vertrauensanker etabliert; (iii) der mobile Router (140) dazu veranlasst wird, ein Signal in die Bindungsaktualisierungsnachricht einzubetten, die er an seinen Heimatagenten sendet, das so eingerichtet ist, dass der Heimatagent bei Erfassung eines derartigen Signals das kryptografische Zertifikat von dem Vertrauensanker abruft und das abgerufene Zertifikat innerhalb der Bindungsbestätigung, die an den mobilen Router (140) zurück übertragen wird, übermittelt; oder (iv) veranlasst wird, dass das kryptografische Zertifikat an den mobilen Router (140) zusammen mit der Präfixinformation übertragen wird, wenn der mobile Router (140) eine Präfixdelegation von seinem Heimatnetzwerk anfordert.

20. Mobiler Router (140) nach einem der Ansprüche 17 bis 19, der des Weiteren dazu eingerichtet ist, Beschreibungen seiner Fähigkeiten in ein Paket einzubetten, das an einen Korrespondenzknoten (162) zur Etablierung einer Routenoptimierungssitzung gesendet wird, wobei die Beschreibung der Fähigkeiten des mobilen Routers (140) die durch den mobilen Router (140) unterstützten Verfahren enthält, um es dem Korrespondenzknoten (162) zu ermöglichen, das Adresspräfix oder die Präfixe, deren Eigentümerschaft von dem mobilen Router (140) beansprucht wird, zu überprüfen.

21. Mobiler Router (140) nach einem der Ansprüche 17 bis 29, umfassend:
eine untere Netzwerkschnittstelle, die die gesamte Netzwerkhardware, die Software und
die Protokolle repräsentiert, die erforderlich sind, um es dem mobilen Router (140) zu erlauben, mit anderen Knoten in einem paketvermittelten Datenkommunikationsnetzwerk zu kommunizieren,
eine Routingeinheit, die die gesamte Verarbeitung hinsichtlich des Routings in der Schicht der Netzwerkfunktionen handhabt,
eine Tunneleinheit, die verantwortlich ist für die Einrichtung und Aufrechterhaltung von bidirektionalen Tunnels zwischen dem mobilen Router (140) und seinem Heimatagenten sowie für die Etablierung und Aufrechterhaltung von bidirektionalen Tunnels für eine Routenoptimierungssitzung,
eine Sicherheitseinheit, die verantwortlich ist für die Aufrechterhaltung von Zertifikaten, die der mobile Router (140) bekommen hat, und für die gegebenenfalls erforderliche Erzeugung von Zertifikaten dieses mobilen Routers (140), und
eine Routenoptimierungseinheit, die verantwortlich ist für die Etablierung und Aufrechterhaltung der Routenoptimierungssitzung zwischen dem mobilen Router (140) und anderen Kommunikationsknoten außerhalb des mobilen Netzwerks (108), das durch den mobilen Router (140) verwaltet wird.

## Revendications

1. Système de noeuds de communication dans un réseau de communication de données à commutation de paquets comprenant un routeur mobile (140) gérant un réseau mobile (108), agencé de telle manière que pour établir une optimisation de routage pour une session de communication entre un noeud (150) dans le réseau mobile (108) et un noeud correspondant (162) extérieur au réseau mobile (108), le routeur mobile (140) est adapté pour envoyer un message de binding update à une entité externe (170), le message de binding update comprenant une adresse de base du routeur mobile (140), une adresse aux bons soins de du routeur mobile (140), et un ou des préfixe(s) d'adresse du réseau mobile (108),
**caractérisé en ce que**
le message de binding update comprend en outre un paramètre de vérification permettant à l'entité externe (170) de vérifier si un expéditeur du message de binding update est un propriétaire authentique d'un ou plusieurs préfixe(s) d'adresse spécifié(s) du réseau mobile (108), et de l'information de chemin de vérification contenant de l'information nécessaire pour des destinataires du message de binding update afin d'obtenir une vérification du paramètre de vérification.

2. Système selon la revendication 1, dans lequel ledit paramètre de vérification est un certificat cryptographique, une partie d'un certificat cryptographique ou une dérivation d'un certificat cryptographique, ledit certificat cryptographique étant émis par une ancre de confiance, **caractérisé en ce que** le certificat cryptographique comprend une section d'information contenant l'identification du routeur mobile (140) et la propriété du ou des préfixe(s) d'adresse du réseau mobile (108) par le routeur mobile (140), ainsi qu'une section de signature contenant une somme de contrôle de la section d'information générée cryptographiquement, agencé de telle sorte que d'autres noeuds peuvent vérifier la validité de la section d'information à partir de la section de signature mais ne peuvent pas générer la section de signature à partir de la section d'information.

3. Système selon la revendication 2, dans lequel le routeur mobile (140) est adapté pour obtenir ledit certificat cryptographique (i) en faisant configurer et stocker manuellement le certificat cryptographique dans le routeur mobile (140) ; (ii) en faisant exécuter par le routeur mobile (140) un protocole adapté existant via le tunnel bidirectionnel qu'il établit avec son agent d'origine pour extraire le certificat cryptographique à partir de l'ancre de confiance ; (iii) en faisant intégrer par le routeur mobile (140) un signal dans le message de binding update envoyé à son agent d'origine, agencé de telle sorte que l'agent d'origine, lors de la détection d'un tel signal, extrait le certificat cryptographique à partir de l'ancre de confiance et transmet le certificat extrait dans la confirmation de liaison qui est renvoyée au routeur mobile (140) ; ou (iv) en faisant transmettre le certificat cryptographique au routeur mobile (140) conjointement avec l'information de préfixe lorsque le routeur mobile (140) demande une délégation de préfixe à son réseau d'origine.

4. Système selon la revendication 2, dans lequel l'entité externe (170) est adaptée pour vérifier un message de binding update reçu du routeur mobile (140) en vérifiant si le ou les préfixe(s) d'adresse spécifiés dans le message de binding update correspondent à celui ou ceux spécifié(s) dans la section d'information du certificat cryptographique, en extrayant une clé à partir de l'ancre de confiance identifiée par l'information de chemin de vérification contenue dans le message d'enregistrement, et en utilisant la clé pour vérifier la validité du certificat cryptographique.

5. Système selon la revendication 2, dans lequel l'entité externe (170) est adaptée pour vérifier un message de binding update reçu du routeur mobile (140) en dérivant la section d'information du certificat cryptographique à partir du ou des préfixe(s) d'adresse spécifiés dans le message d'enregistrement, en extrayant une clé à partir de l'ancre de confiance identifiée par l'information de chemin de vérification contenue dans le message d'enregistrement, et en utilisant la clé pour vérifier la validité de la section d'information dérivée du certificat cryptographique à partir de la section de signature du certificat cryptographique.

6. Système selon la revendication 2, dans lequel l'entité externe (170) est adaptée pour vérifier un message de binding update reçu du routeur mobile (140) en contactant une tierce partie pour exécuter la vérification de certificats cryptographiques, ou de paramètres dérivés des certificats cryptographiques, contenus dans le message d'enregistrement, et dans lequel la tierce partie est adaptée pour effectuer la vérification au nom de l'entité externe (170) et pour notifier l'entité externe (170) d'un résultat de la vérification.

7. Système selon l'une quelconque des revendications 1 à 6, dans lequel le routeur mobile (140) est adapté pour intégrer des descriptions de ses capacités dans un paquet envoyé à un noeud correspondant (162) pour l'établissement d'une session d'optimisation de routage, agencé de telle sorte que les descriptions de capacités du routeur mobile (140) comprennent les procédés pris en charge par le routeur mobile (140) pour permettre au noeud correspondant (162) de vérifier le ou les préfixe(s) d'adresse déclarés comme appartenant au routeur mobile (140).

8. Système selon la revendication 7, dans lequel un noeud de communication, lors de la réception d'un paquet envoyé par le routeur mobile (140) contenant des descriptions des capacités du routeur mobile (140), est adapté pour répondre avec un paquet contenant les capacités dudit noeud de communication, agencé de telle sorte que les descriptions des capacités du noeud de communication comprennent les procédés pris en charge par le noeud de communication pour vérifier le ou les préfixe(s) d'adresse déclarés comme appartenant au routeur mobile (140).

9. Procédé d'optimisation de routage dans un système de noeuds de communication dans un réseau de communications de données à commutation de paquets, ladite optimisation de routage étant établie entre un noeud (150) dans un réseau mobile (108) et un noeud correspondant (162) extérieur au réseau mobile (108), le réseau mobile (108) étant géré par un routeur mobile (140), ledit procédé comprenant l'étape consistant à envoyer via le routeur mobile (140) à une entité externe (170) un message de binding update comprenant une adresse de base du routeur mobile (140), une adresse aux bons soins de du routeur mobile (140) et un ou des préfixe(s) d'adresse du réseau mobile (108), **caractérisé en ce que**
le message de binding update comprend en outre un paramètre de vérification permettant à l'entité externe (170) de vérifier si un expéditeur du message de binding update est un propriétaire authentique d'un ou plusieurs préfixe(s) d'adresse spécifié(s) du réseau mobile (108), et de l'information de chemin de vérification contenant de l'information nécessaire pour les destinataires du message de binding update afin d'obtenir une vérification du paramètre de vérification.

10. Procédé selon la revendication 9, dans lequel ledit paramètre de vérification est un certificat cryptographique, une partie d'un certificat cryptographique ou une dérivation d'un certificat cryptographique, ledit certificat cryptographique étant émis par une ancre de confiance, et
dans lequel ledit certificat cryptographique comprend une section d'information contenant l'identification du routeur mobile (140) et la propriété du ou des préfixe(s) d'adresse du réseau mobile (108) par le routeur mobile (140), ainsi qu'une section de signature contenant une somme de contrôle de la section d'information générée cryptographiquement, agencé de telle sorte que d'autres noeuds peuvent vérifier la validité de la section d'information à partir de la section de signature mais ne peuvent pas générer la section de signature à partir de la section d'information.

11. Procédé selon la revendication 10, comprenant en outre l'étape d'obtention dudit certificat cryptographique par le routeur mobile (140) (i) en faisant configurer et stocker manuellement le certificat cryptographique dans le routeur mobile (140) ; (ii) en faisant exécuter par le routeur mobile (140) un protocole adapté existant via le tunnel bidirectionnel qu'il établit avec son agent d'origine pour extraire le certificat cryptographique à partir de l'ancre de confiance ; (iii) en faisant intégrer par le routeur mobile (140) un signal dans le message de binding update envoyé à son agent d'origine, agencé de telle sorte que l'agent d'origine, lors de la détection d'un tel signal, extrait le certificat cryptographique à partir de l'ancre de confiance et transmet le certificat extrait dans la confirmation de liaison qui est renvoyée au routeur mobile (140) ; ou (iv) en faisant transmettre le certificat cryptographique au routeur mobile (140) conjointement avec l'information de préfixe lorsque le routeur mobile (140) demande une délégation de préfixe à son réseau d'origine.

12. Procédé selon la revendication 11, comprenant en outre l'étape de vérification d'un message de binding update reçu par l'unité externe (170) en provenance du routeur mobile (140) en vérifiant si le ou les préfixe(s) d'adresse spécifiés dans le message de binding update correspondent à celui ou ceux spécifié(s) dans la section d'information du certificat cryptographique, en extrayant une clé à partir de l'ancre de confiance identifiée par l'information de chemin de vérification contenue dans le message d'enregistrement, et en utilisant la clé pour vérifier la validité du certificat cryptographique.

13. Procédé selon la revendication 11, comprenant en outre l'étape de vérification d'un message de binding update reçu par l'unité externe (170) en provenance du routeur mobile (140) en dérivant la section d'information du certificat cryptographique à partir du ou des préfixe(s) d'adresse spécifiés dans le message d'enregistrement, en extrayant une clé à partir de l'ancre de confiance identifiée par l'information de chemin de vérification contenue dans le message d'enregistrement, et en utilisant la clé pour vérifier la validité de la section d'information dérivée du certificat cryptographique à partir de la section de signature du certificat cryptographique.

14. Procédé selon la revendication 11, comprenant en outre l'étape de vérification d'un message de binding update reçu par l'unité externe (170) en provenance du routeur mobile (140) en contactant une tierce partie pour exécuter la vérification de certificats cryptographiques, ou de paramètres dérivés des certificats cryptographiques, contenus dans le message d'enregistrement, et dans lequel la tierce partie est adaptée pour effectuer la vérification au nom de l'entité externe (170) et pour notifier l'entité externe (170) d'un résultat de la vérification.

15. Procédé selon l'une quelconque des revendications 10 à 14, comprenant en outre l'étape consistant à intégrer, via le routeur mobile (140), des descriptions de ses capacités dans un paquet envoyé à un noeud correspondant (162) pour l'établissement d'une session d'optimisation de routage, agencé de telle sorte que les descriptions de capacités du routeur mobile (140) comprennent les procédés pris en charge par le routeur mobile (140) pour permettre au noeud correspondant (162) de vérifier le ou les préfixe(s) d'adresse déclarés comme appartenant au routeur mobile (140).

16. Procédé selon la revendication 15, comprenant en outre l'étape consistant à répondre, lors de la réception d'un paquet envoyé par le routeur mobile (140) contenant des descriptions des capacités du routeur mobile (140) à un noeud de communication, avec un paquet contenant les capacités dudit noeud de communication, agencé de telle sorte que les descriptions des capacités du noeud de communication comprennent les procédés pris en charge par le noeud de communication pour vérifier le ou les préfixe(s) d'adresse déclarés comme appartenant au routeur mobile (140).

17. Routeur mobile (140) pour gérer un réseau mobile (108) dans un système de noeuds de communication d'un réseau de communication de données à commutation de paquets, agencé de telle manière que pour établir une optimisation de routage pour une session de communication entre un noeud (150) dans le réseau mobile (108) et un noeud correspondant (162) extérieur au réseau mobile (108), le routeur mobile (140) est adapté pour envoyer un message de binding update à une entité externe (170), le message de binding update comprenant une adresse de base du routeur mobile (140), une adresse globale aux bons soins de du routeur mobile (140) et un ou des préfixe(s) d'adresse du réseau mobile (108),
**caractérisé en ce que**
le message de binding update comprend en outre un paramètre de vérification permettant à l'entité externe (170) de vérifier si l'expéditeur du message de binding update est un propriétaire authentique d'un ou plusieurs préfixe(s) d'adresse spécifié(s) du réseau mobile (108), et de l'information de chemin de vérification contenant de l'information nécessaire pour les destinataires du message de binding update afin d'obtenir une vérification du paramètre de vérification.

18. Routeur mobile (140) selon la revendication 17, dans lequel ledit paramètre de vérification est un certificat cryptographique, une partie d'un certificat cryptographique ou une dérivation d'un certificat cryptographique, ledit certificat cryptographique étant émis par une ancre de confiance, **caractérisé en ce que** le certificat cryptographique comprend une section d'information contenant l'identification du routeur mobile (140) et la propriété du ou des préfixe(s) d'adresse du réseau mobile (108) par le routeur mobile (140), ainsi qu'une section de signature contenant une somme de contrôle de la section d'information générée cryptographiquement, agencé de telle sorte que d'autres noeuds peuvent vérifier la validité de la section d'information à partir de la section de signature mais ne peuvent pas générer la section de signature à partir de la section d'information.

19. Routeur mobile (140) selon la revendication 18, adapté en outre pour obtenir ledit certificat cryptographique (i) en configurant et en stockant manuellement le certificat cryptographique dans le routeur mobile (140) ; (ii) en exécutant un protocole adapté existant via le tunnel bidirectionnel qu'il établit avec son agent d'origine pour extraire le certificat cryptographique à partir de l'ancre de confiance ; (iii) en intégrant un signal dans le message de binding update envoyé à son agent d'origine, agencé de telle sorte que l'agent d'origine, lors de la détection d'un tel signal, extrait le certificat cryptographique à partir de l'ancre de confiance et transmet le certificat extrait dans la confirmation de liaison qui est renvoyée au routeur mobile (140) ; ou (iv) en faisant transmettre le certificat cryptographique au routeur mobile (140) conjointement avec l'information de préfixe lorsque le routeur mobile (140) demande une délégation de préfixe à son réseau d'origine.

20. Routeur mobile (140) selon l'une quelconque des revendications 17 à 19, adapté en outre pour intégrer des descriptions de ses capacités dans un paquet envoyé à un noeud correspondant (162) pour l'établissement d'une session d'optimisation de routage, agencé de telle sorte que les descriptions de capacités du routeur mobile (140) comprennent les procédés pris en charge par le routeur mobile (140) pour permettre au noeud correspondant (162) de vérifier le ou les préfixe(s) d'adresse déclarés comme appartenant au routeur mobile (140).

21. Routeur mobile (140) selon l'une quelconque des revendications 17 à 20, comprenant une interface de réseau inférieure représentant tous les équipements, logiciels et protocoles de réseau nécessaires pour permettre au routeur mobile (140) de communiquer avec d'autres noeuds dans un réseau de communication de données à commutation de paquets,
une unité de routage qui gère tout le traitement relatif au routage dans la couche d'interconnexion de réseaux,
une unité de tunnellisation responsable de l'établissement et du maintien d'un tunnel bidirectionnel entre le routeur mobile (140) et son agent d'origine, et de l'établissement et du maintien d'un tunnel bidirectionnel pour une session d'optimisation de routage,
une unité de sécurité responsable du maintien de certificats obtenus par le routeur mobile (140), et de la génération de certificats dudit routeur mobile (140) là où nécessaire, et
une unité d'optimisation de routage responsable de l'établissement et du maintien de la session d'optimisation de routage entre le routeur mobile (140) et d'autres noeuds de communication extérieurs au réseau mobile (108) gérés par le routeur mobile (140).
